# EUROPEAN PATENT SPECIFICATION

(11) **EP 4 237 120 B1**
(45) Date of publication and mention of the grant of the patent: **09.12.2026**
(21) Application number: 21887515.1
(22) Date of filing: 28.10.2021
(51) Int. Cl.: B01D 29/21, B01D 29/96, B01D 35/027, B01D 46/00

(54) **FILTER ASSEMBLIES WITH ALIGNMENT FEATURES**
FILTERANORDNUNGEN MIT AUSRICHTUNGSFUNKTIONEN
ENSEMBLES FILTRES AVEC DES CARACTÉRISTIQUES D'ALIGNEMENT

(30) Priority: 02.11.2020 US 202063108568 P
(43) Date of publication of application: 06.09.2023
(73) Proprietor: Atmus Filtration Inc., Wilmington, DE 19808 (US)
(72) Inventor: SCHWARTZ, Scott W., Cottage Grove, Wisconsin 53527 (US)
(74) Representative: Marks & Clerk LLP
(86) International application number: PCT/US2021/057041
(87) International publication number: WO 2022/094074

(56) References cited:
- DE-A1- 102015 003 297
- US-A- 5 613 237
- US-A1- 2006 021 932
- US-A1- 2007 045 167
- US-A1- 2010 107 580
- US-A1- 2013 199 143
- US-A1- 2015 013 288
- US-A1- 2018 345 196
- US-A1- 2018 361 295
- US-B2- 9 359 982

## Description

### CROSS-REFERENCE TO RELATED APPLICATIONS

The present application claims priority to and the benefit of U.S. Provisional Patent Application No. 63/108,568, filed November 2, 2020.

### FIELD

The present application relates generally to filter assemblies for air intake systems or the like.

### BACKGROUND

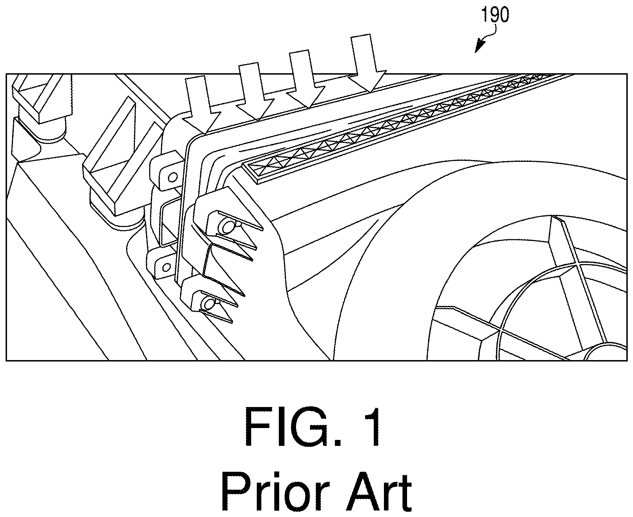

In hot, under-hood applications, various conventional polymer housings 190 (as shown in FIG. 1) are used extensively in air filter assemblies. In-line flow filters require large face flow areas to minimize restriction. However, these large, open polymer housings 190 have a tendency to warp, which causes servicing the air filter assembly to be difficult and prevents the sealing interface of the housing 190 from aligning (causing leakage).
US2010/0107580 discloses a filter device which has a housing assembled of a housing bottom part and housing top part. A filter element is inserted into the housing and is made of a filter medium. A locking device connects the filter element with the housing bottom part and the housing top part in a mounted position of the filter element inside the housing. The locking device has a locking element connected to the filter element. The housing bottom part and the housing top part each have locking parts, wherein the locking element engages the locking parts on the housing bottom part and the housing top part.
US9359982B2 discloses an air cleaner assembly and a filter element reduce wall noise by rigidly coupling the movement of opposing air cleaner housing sidewalls through the installed filter element. The sidewalls are rigidly coupled through the filter element with the sidewalls coupled to move together in unison such that wall deflection forces created by the pressure pulsations tend to cancel each resulting in improved dynamic stiffening of the air cleaner walls and reduced wall noise.
US2015/013288A1 discloses an air filter of an internal combustion engine of a motor vehicle, a filter housing and at least one filter element. The filter housing has at least one inlet and at least one outlet for the fluid. The filter element, particularly a flat filter element, comprises an open filter bellows made of a filter medium, which has an upstream side and a downstream side for the fluid to be filtered. The filter element is arranged in the filter housing in such a manner that it separates the at least one inlet from the at least one outlet. An element axis of the filter element and a housing axis of the filter housing can be aligned parallel or axially to an installation direction of the filter element for installing the filter element into the filter housing. The filter element has at least one guide crosspiece, which extends axially and radially outward on a peripheral exterior side, relative to the element axis, of the filter element.
US2006/021932A1 discloses a flat panel filter to filter air flowing in an inline fluid duct system as an air supply system for an engine or the like includes a housing configured as a section of an inline fluid flow duct of an inline fluid duct system, the housing having a flow path including a fluid inlet to receive air flow from an inlet fluid duct portion of such inline fluid duct system and a fluid outlet to provide air flow to an outlet fluid duct portion of such inline fluid duct system, a filter in the housing, and a connector configured to connect the housing as an inline fluid flow section of such inline fluid duct system between such inlet fluid duct portion and outlet fluid duct portion of such an inline fluid duct system, the connector including a number of hook-like fingers of the housing, respectively, at least proximate a respective fluid inlet and fluid outlet of the housing to provide a sliding relation and resiliently biased connection with respective inlet and outlet fluid duct portions of such inline fluid duct system. Detents resist sliding of the hook-like fingers relative to the inlet and outlet duct portions; a lock is selectively operable to lock or to unlock connection between the flat panel filter and the inlet and outlet duct portions; and a gasket seals the connection between the flat panel filter and the inlet and outlet duct portions.
DE102015003297A1 disloses a filter device, in particular for a motor vehicle, having a filter element (12) as the first component, which has a filter medium through which a gas can filter the gas, with at least one housing element as the second component , in the receiving space the filter medium is at least partially receivable, and with a latching device which at least one arranged on one of the components first latching element and at least one arranged on the other component, second latching element which is movable between at least one latching position for latching the latching elements and at least one release position for releasing the latching elements, wherein the second latching element about a hinged axis between the latching position and the release position is movable and remains independent at least in the release position.

### SUMMARY

The invention is set out in the appended set of claims.
Various embodiments provide for a filter assembly comprising a filter element comprising a filter media and a frame and a housing assembly containing the filter media. The housing assembly comprises a housing base and a housing cover. The housing base comprises a base end portion, and the housing cover comprises a housing end portion. The frame is secured to and surrounding at least an outer perimeter of the filter media. The frame is axially positionable between and attachable to the housing base and the housing cover such that the frame engages with the base end portion and the cover end portion and a seal is formed between the frame and at least one of the housing base and the housing cover.

Various embodiments provide for a filter element comprising a filter media and a frame secured to and surrounding at least an outer perimeter of the filter media. The frame is positionable axially between and attachable to a housing base and a housing cover of a housing assembly such that the frame engages with a base end portion of the housing base and a cover end portion of the housing cover, the filter media is contained within the housing assembly, and a seal is formed between the frame and at least one of the housing base and the housing cover.

Various embodiments provide for a filter assembly comprising a filter element comprising a filter media and a frame and a housing assembly containing the filter media. The frame is secured to and surrounding at least an outer perimeter of the filter media. The housing assembly comprises a housing base, a housing cover, a fastener, and a fastener supporting component. The housing base comprises a base end portion, and the housing cover comprises a housing end portion. The fastener supporting component is coupled to the at least of one of the the housing base and the housing cover. The frame is axially positionable between and attachable to the housing base and the housing cover.

These and other features, together with the organization and manner of operation thereof, will become apparent from the following detailed description when taken in conjunction with the accompanying drawings, wherein like elements have like numerals throughout the several drawings described below.

### BRIEF DESCRIPTION OF THE DRAWINGS

FIG. 1 is a perspective view of a conventional filter housing.
FIG. 2A is a perspective view of a filter assembly according to one embodiment.
FIG. 2B is a side view of the filter assembly of FIG. 2A.
FIGS. 3A-3B are perspective view of filter elements according to various embodiments.
FIG. 4 is an exploded view of the filter assembly of FIG. 2A (without the filter media).
FIG. 5 is a perspective view of a housing base of the filter assembly of FIG. 2A.
FIG. 6 is a perspective view of a housing cover of the filter assembly of FIG. 2A.
FIG. 7A is a perspective view of a frame of the filter assembly of FIG. 2A.
FIG. 7B is a cross-sectional view of a portion of the frame with a portion of the housing assembly of the filter assembly of FIG. 2A.
FIG. 8 is a cross-sectional view of a portion of the filter assembly of FIG. 2A.
FIG. 9 is a cross-sectional view of a portion of the filter assembly of FIG. 2A.
FIG. 10 is a cross-sectional view of a portion of a filter assembly according to another embodiment.
FIG. 11 is a cross-sectional view of a portion of a filter assembly according to yet another embodiment.
FIG. 12 is a cross-sectional view of a portion of a filter assembly according to still another embodiment.
FIG. 13 is a perspective view of a filter assembly according to another embodiment.
FIG. 14 is an exploded view of the filter assembly of FIG. 13 (without the filter media).
FIGS. 15A-15B are perspective views of a frame of the filter assembly of FIG. 13.
FIG. 16 is a cross-sectional view of a portion of the frame with a portion of the housing assembly of the filter assembly of FIG. 13.
FIG. 17 is a cross-sectional view of a portion of the filter assembly of FIG. 13.

### DETAILED DESCRIPTION

Referring to the figures generally, various embodiments disclosed herein relate to a filter assembly comprising a filter element and a housing assembly. The filter element comprises a filter media and a frame. The configuration of the frame and the housing assembly ensures that the filter element and the housing assembly are aligned and sealed to prevent leakage and to prevent the filter assembly from warping. The frame is positioned and configured as an intermediary structure that is positioned axially between the housing base and the housing cover.

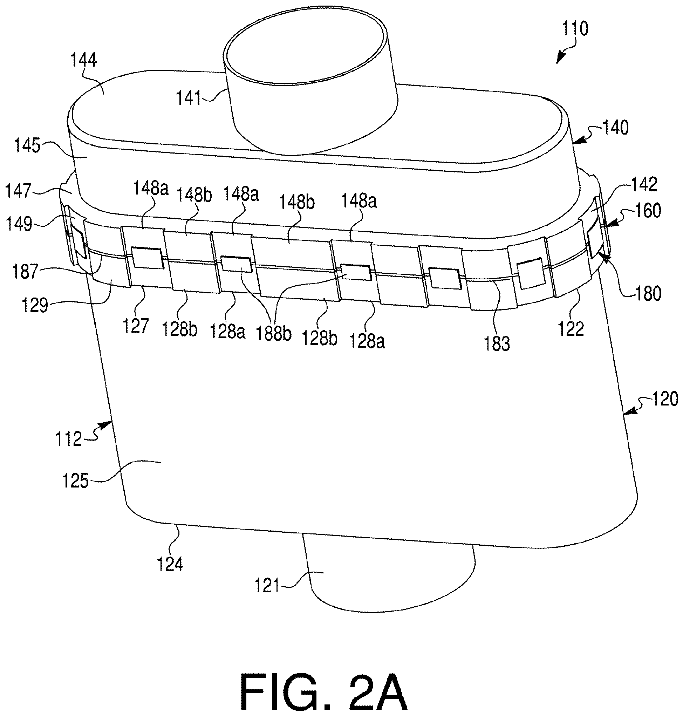

In FIGS. 2A-2B, a filter assembly 110 is shown, according to one embodiment. The filter assembly 110 comprises a housing assembly 112 and a filter element 160 that are attachable together with various guiding and positioning features, as described further herein. The filter assembly 110 may be used to filter a fluid such air. For reference, the axial direction refers to a direction that is substantially parallel to the flow of fluid through the housing assembly 112 and through the filter element 160. The radial direction refers to a direction that is substantially perpendicular to the flow of fluid through the housing assembly 112.

The configuration of the filter assembly 110 helps protect and retain the filter element 160, improves the ease of servicing the filter assembly 110, forms improved seals to prevent leakage, and can be used with a wide variety of different filter elements that utilize axial seals. Additionally, the size and volume of the filter assembly 110 (in particular the housing assembly 112) is minimized, and a variety of different fastening methods and styling schemes can be used.

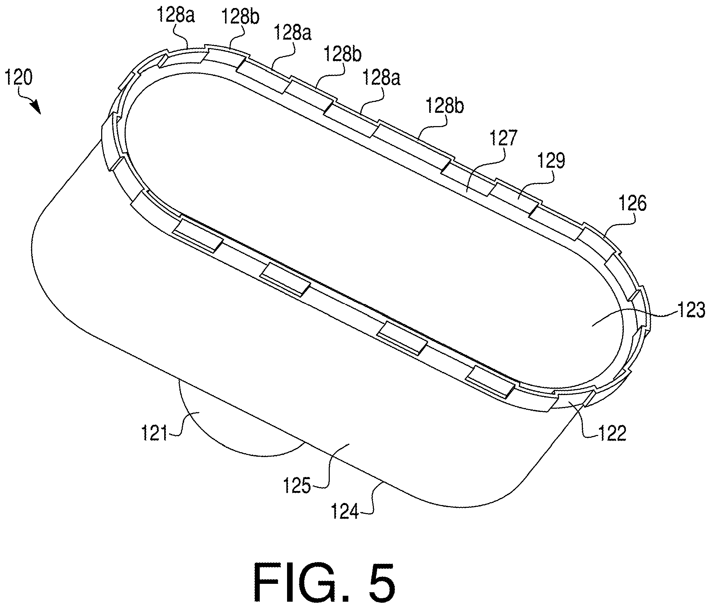

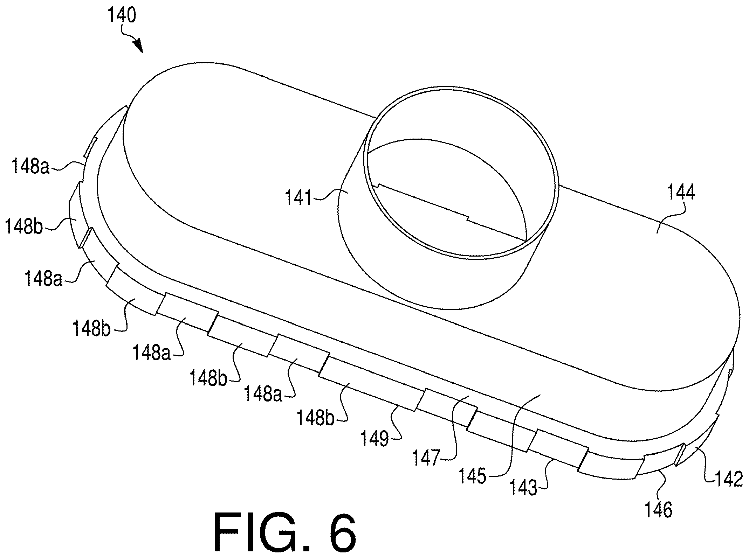

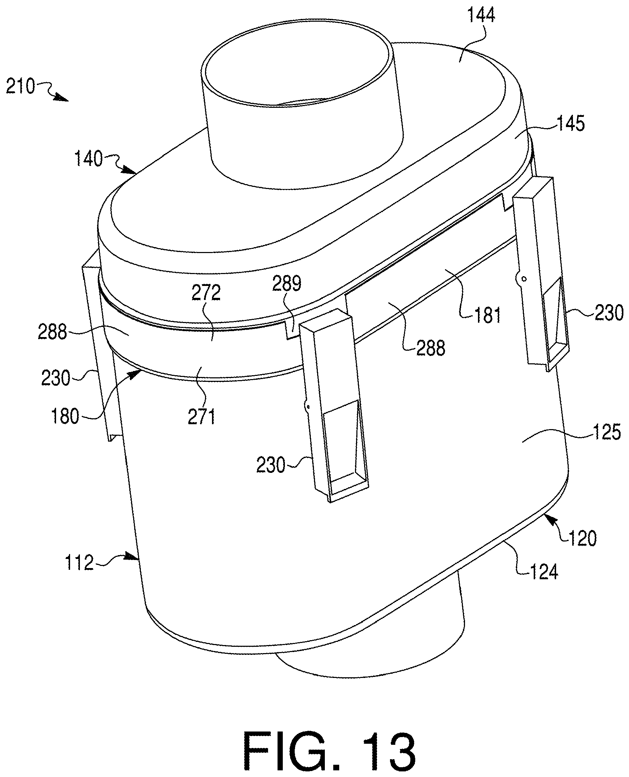

The housing assembly 112 is configured to contain or house the filter element 160 and comprises a housing body or base 120 (as shown in FIG. 5) and a housing cover 140 (as shown in FIG. 6). The housing base 120 and the housing cover 140 are positioned along opposite sides or axial ends of the filter element 160 (with the frame 180 of the filter element 160 (as described further herein) in between). The housing base 120 comprises a base fluid port 121, and the housing cover 140 comprises a cover fluid port 141. One of the base fluid port 121 or the cover fluid port 141 is an inlet fluid port, and the other of the base fluid port 121 or the cover fluid port 141 is an outlet fluid port. Accordingly, unfiltered fluid flows into the housing assembly 112 of the filter assembly 110 through one of the base fluid port 121 or the cover fluid port 141 and flows through the filter media 162 (to be filtered by the filter element 160), and filtered fluid flows out from the housing assembly 112 of the filter assembly 110 through the other of the base fluid port 121 or the cover fluid port 141. Optionally, the housing base 120 and/or the housing cover 140 may include various fasteners, such as over-center latches (as shown in FIG. 13, for example), clips, or through-bolts to secure the housing assembly 112 together. The cross-sectional shape of the housing assembly 112 (along a radially-extending plane), as well as the filter element 160, may be substantially oval.

The housing base 120 defines a base opening 123, and the housing cover 140 defines a cover opening 143. One or both of the base opening 123 and/or the cover opening 143 is approximately the same shape and size as (and optionally larger than) the first flow face 164 and the second flow face 165 of the filter media 162 (as described further herein), thereby maximizing the flow area within the housing assembly 112 and allowing the entire filter media 162 to fit within the housing assembly 112 (where at least a portion of the axial flow length of the filter media 162 fits within the housing base 120 and/or the housing cover 140). The base fluid port 121 may be directly opposite the base opening 123, and the cover fluid port 141 may be directly opposite the cover opening 143, thereby allowing fluid to flow in one direction directly between the base fluid port 121 and the cover fluid port 141 and the base opening 123 and the cover opening 143, respectively (while flowing through at least a portion of the filter media 162 therebetween).

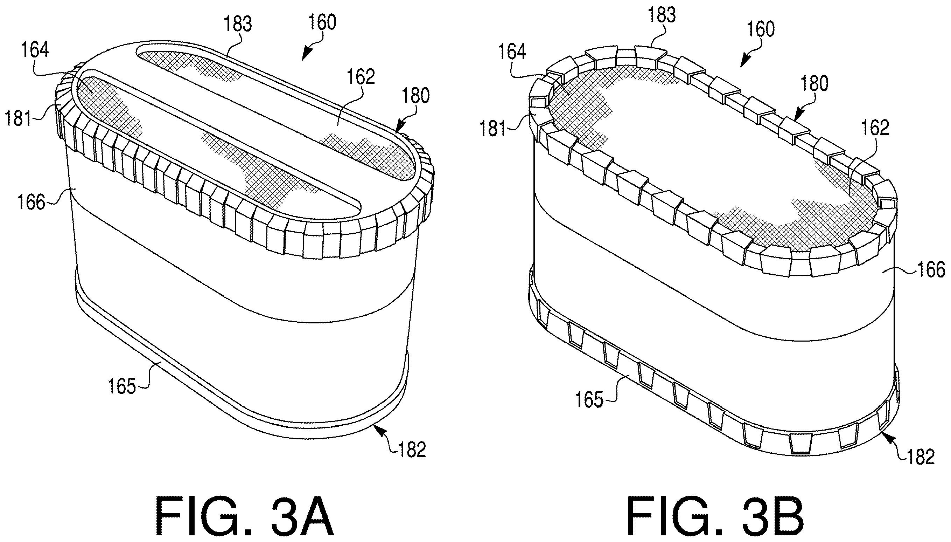

As shown in FIGS. 3A-3B, the filter element 160 comprises a filter media 162 and at least one frame 180 (e.g., an air filter sealing frame). The filter element 160 (in particular the filter media 162) is completely positionable within at least a portion of the housing assembly 112 (for example, at least partially within the housing base 120). The filter media 162 is configured to filter a fluid (such as air) and has and defines a first flow face 164 and a second flow face 165 that are substantially opposite to each other and radially-extending, through which the fluid to be (or being) filtered flows and a side wall 166 extending axially between the first flow face 164 and the second flow face 165 and circumferentially surrounds the middle of the filter media 162 (through which the fluid being filtered flows).

The first flow face 164 and the second flow face 165 extend radially along substantially parallel, radially-extending planes that are substantially perpendicular to the direction of fluid flow through the filter media 162 and the side wall 166. One of the first flow face 164 or the second flow face 165 is an inlet flow face (through which unfiltered fluid flows), and the other of the first flow face 164 and the second flow face 165 is an outlet flow face (through which filtered fluid flows). Accordingly, the fluid flows axially through the filter media 162 between the first flow face 164 and the second flow face 165. The first flow face 164 and the second flow face 165 may optionally be substantially flat and parallel to each other and approximately the same size as each other. However, the filter media 162 may have other shapes in which the first flow face 164 and the second flow face 165 are not parallel to or the same size as each other.

As shown in FIGS. 3A-3B, the filter media 162 may be attached to or potted into the frame 180 such that the frame 180 is secured to and surrounds at least the outer perimeter (in particular the side wall 166) of the filter media 162. The frame 180 may be positioned along an axial end of the filter media 162 (e.g., along the first flow face 164 or the second flow face 165) and/or along the side wall 166 of the filter media 162. The filter element 160 may include one frame 180 or a plurality of frames 180. According to one embodiment as shown in FIGS. 3A-3B, the filter element 160 includes a second frame 182 (in addition to the first frame 180). The second frame 182 may have the same or a different configuration as the first frame 180. For the example, the second frame 182 may or may not be a sealing frame. The second frame 182 may optionally be positioned along an opposite axial end of the filter media 162 as the first frame 180.

The frame 180 may extend axially along only part of or the entire axial length of the filter media 162. As described further herein, the frame 180 is directly alignable with, positionable between, and attachable to both the housing base 120 and the housing cover 140 such that a seal is formed between the frame 180 and at least one of the housing base 120 and the housing cover 140. As the frame 180 is positioned axially between the housing base 120 and the housing cover 140, the frame 180 axially separates the housing base 120 and the housing cover 140 and is an intermediary structure positioned axially between the housing base 120 and the housing cover 140. The frame 180 defines a frame opening 183, within which at least a portion of the filter media 162 is positioned and secured within. The frame 180 may optionally extend axially above and/or below the first flow face 164 or the second flow face 165 of the filter media 162.

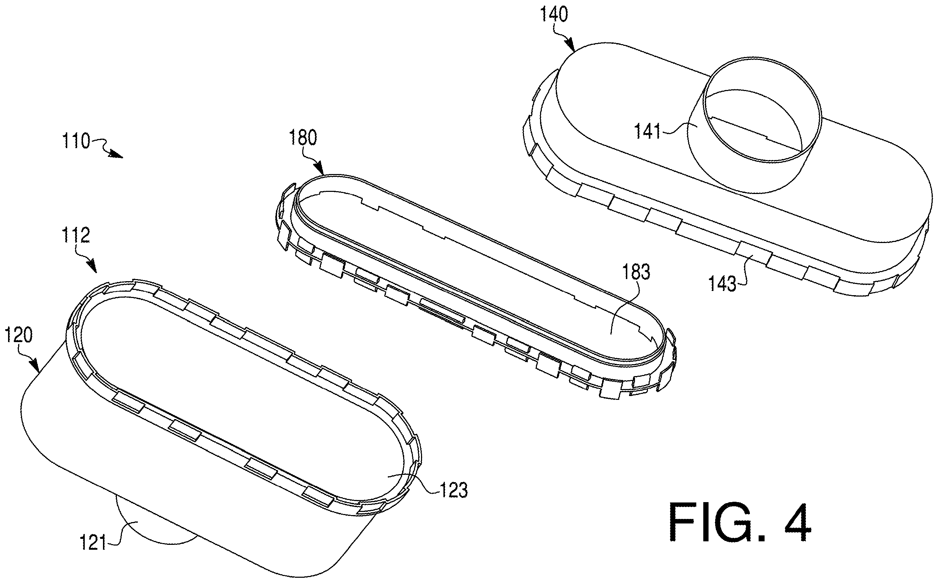

FIG. 4 shows an exploded view of the housing base 120, the housing cover 140, and the frame 180, all of which are attachable together. The frame 180 is positioned axially in between the housing base 120 and the housing cover 140 (in the axial, flow direction through the housing assembly 112). Accordingly, a top portion of the housing base 120 is directly attachable and engagable to a bottom portion of the frame 180 (along the base opening 123), and a bottom portion of the housing cover 140 is directly attachable and engagable to a top portion of the frame 180 (along the cover opening 143). The housing base 120 and the housing cover 140 each attach to and engage with the frame 180 (which is an intermediary structure positioned axially between the housing base 120 and the housing cover 140) and do not directly attach or engage together. Accordingly, the filter assembly 210 cannot be assembled until the filter element 160 (in particular the frame 180) is installed. Specifically, the housing base 120 and the housing cover 140 cannot be assembled together without the frame 180 in place (axially between the housing base 120 and the housing cover 140). Since the frame 180 interlocks with the housing base 120 and the housing cover 140 (as described further herein), the configuration of the filter assembly 210 prevents improper filter elements from being used. Comparatively, in various conventional filter assemblies, a frame may be inserted into the housing body (rather than being positioned axially between the housing body and the cover) and/or a pinch seal gasket (rather than a frame) may separate the housing body and the cover.

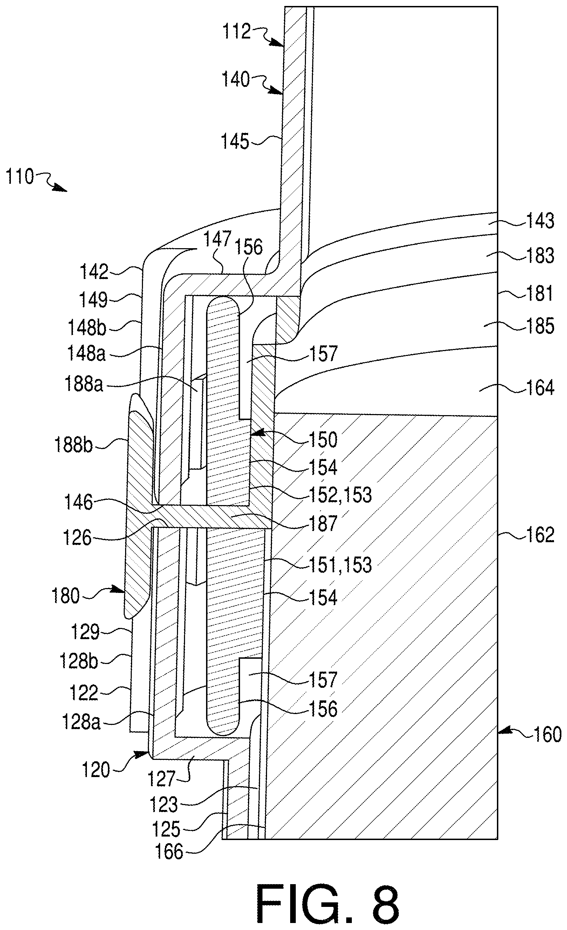

When the frame 180, the housing base 120, and the housing cover 140 are attached together, the base opening 123, the cover opening 143, and the frame opening 183 are axially aligned with each other (as shown in FIG. 8). The housing base 120, the housing cover 140, and the frame 180 each include various guiding and positioning features (as described further herein) to align with and attach with each other. At least one gasket arrangement 150 (as described further herein) forms a seal between the housing base 120 and the frame body 181 of the frame 180 and between the housing cover 140 and the frame 180. As described further herein, a portion (i.e., the outer extensions 188b) of the frame 180 (e.g., a first subset, a second subset, etc.) extends axially along at least a portion of the outer perimeters of the housing base 120 and the housing cover 140, and a portion (i.e., the inner extension 188a) of the frame 180 (e.g., a first subset, a second subset, etc.) extends axially along at least a portion of the inner perimeter of the housing base 120 and the housing cover 140 (as shown in FIG. 8).

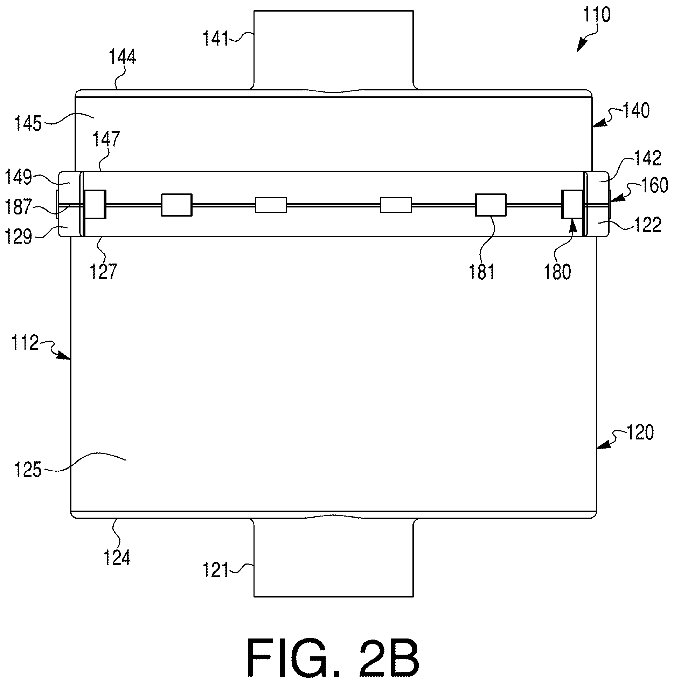

As shown in FIGS. 2B and 5, the housing base 120 comprises a radially-extending base end wall 124, an axially-extending base side or main wall 125, and a base end portion 122. The base end portion 122 comprises a radially-extending base ledge or lip 127, an axially-extending base attachment wall 129, and a base axial edge or end 126. The base end wall 124 extends substantially parallel to the first flow face 164 or the second flow face 165 of the filter media 162, along a radially-extending plane. The base fluid port 121 may extend through and be defined by the base end wall 124. The base end wall 124 is positioned along one axial end of the base main wall 125 (and the base lip 127 is positioned along the other axial end of the base main wall 125). The base main wall 125 and the base attachment wall 129 extend in an axial direction (substantially parallel to the side wall 166 of the filter media 162) and circumferentially surround and define the base opening 123. At least a portion of the axial length of the filter media 162 (i.e., along the side wall 166) may be circumferentially surrounded by the base main wall 125 and the base attachment wall 129. The base end wall 124 and the base end portion 122 are positioned along opposite axial ends of the base main wall 125 from each other. Optionally, if the base end portion 122 does not include the base lip 127, the base end portion 122 may include a portion of the base main wall 125.

The base lip 127 extends radially outward from an axial end of the base main wall 125. The base main wall 125 is positioned along and extends from an inner radial end of the base lip 127, and the base attachment wall 129 is positioned along and extends from an outer radial end of the base lip 127. The base main wall 125 and the base attachment wall 129 extend axially from the base lip 127 in opposite axial directions. The base attachment wall 129 of the housing base 120 (which is an aligning and positioning feature of the housing base 120) extends axially from the outer radial end of the base lip 127 and defines an axial end (e.g., a top end) of the housing base 120. Accordingly, the cross-sectional area defined and encompassed by the base attachment wall 129 is larger than the cross-sectional area defined and encompassed by the base main wall 125 (taken along a radially-extending plane that is substantially perpendicular to the direction of flow through the housing assembly 112). The base axial end 126 is positioned along one axial end of the base attachment wall 129 (that is opposite to the axial end of the base attachment wall 129 that is closer to the base main wall 125). The base axial end 126 may be a first axial end, and the base end wall 124 or a portion of the base fluid port 121 may be the second axial end, where the first axial end and the second axial end are positioned along opposite axial ends of the housing base 120. The base axial end 126 defines the base opening 123.

The base attachment wall 129 of the housing base 120 includes a plurality of base guiding and positioning features (i.e., a plurality of base inner notched portions 128a and a plurality of base outer notched portions 128b) about the entire circumferential length or perimeter of the base attachment wall 129, as shown in FIG. 5. The base inner notched portions 128a are positioned radially inward relative to the base outer notched portions 128b (and the base outer notched portions 128b are positioned radially outward relative to the base inner notched portions 128a). The base inner notched portions 128a and the base outer notched portions 128b are alternatively positioned about the circumferential length of the base attachment wall 129 such the inner surface and the outer surface of the base attachment wall 129 are intermittently stepped radially-inward and radially-outward about the entire length of the base attachment wall 129. The base inner notched portions 128a and the base outer notched portions 128b may extend continuously (e.g., are attached to each other along their axial lengths) such that the base attachment wall 129 extends continuously about the perimeter of the housing base 120. The base inner notched portions 128a and the base outer notched portions 128b are configured to interlock with the inner extensions 188a and the outer extensions 188b of the frame 180 (as described further herein), with the inner extensions 188a and the outer extensions 188b positioned alternatively on opposite sides of the base attachment wall 129.

As shown in FIGS. 2B and 6, the housing cover 140 comprises a radially-extending cover end wall 144, an axially-extending cover side or main wall 145, and a cover end portion 142. The cover end portion 142 comprises a radially-extending cover ledge or lip 147, an axially-extending cover attachment wall 149, and a cover axial edge or end 146. The cover end wall 144 extends substantially parallel to the first flow face 164 and the second flow face 165 of the filter media 162, along a radially-extending plane. The cover fluid port 141 may extend through and be defined by the cover end wall 144. The cover end wall 144 is positioned along one axial end of the cover main wall 145 (and the cover lip 147 is positioned along the other axial end of the cover main wall 145). The cover main wall 145 and the cover attachment wall 149 extend in an axial direction (substantially parallel to the side wall 166 of the filter media 162) and circumferentially surround and define the cover opening 143. At least a portion of the axial length of the filter media 162 (i.e., along the side wall 166) may be circumferentially surrounded by the cover main wall 145 and the cover attachment wall 149. The cover end wall 144 and the cover end portion 142 are positioned along opposite axial ends of the cover main wall 145 from each other. Optionally, if the cover end portion 142 does not include the cover lip 147, the cover end portion 142 may include a portion of the cover main wall 145.

The cover lip 147 extends radially outward from an axial end of the cover main wall 145. The cover main wall 145 is positioned along and extends from an inner radial end of the cover lip 147, and the cover attachment wall 149 is positioned along and extends from an outer radial end of the cover lip 147. The cover main wall 145 and the cover attachment wall 149 extend axially from the cover lip 147 in opposite axial directions. The cover attachment wall 149 of the housing cover 140 (which is an aligning and positioning feature of the housing cover 140) extends axially from the outer radial end of the cover lip 147 and defines an axial end (e.g., a bottom portion) of the housing cover 140. Accordingly, the cross-sectional area defined and encompassed by the cover attachment wall 149 is larger than the cross-sectional area defined and encompassed by the cover main wall 145 (taken along a radially-extending plane that is substantially perpendicular to the direction of flow through the housing assembly 112). The cover axial end 146 is positioned along one axial end of the cover attachment wall 149 (that is opposite to the axial end of the cover attachment wall 149 that is closer to the cover main wall 145). The cover axial end 146 may be a first axial end, and the cover end wall 144 or a portion of the cover fluid port 141 may be the second axial end, where the first axial end and the second axial end are positioned along opposite axial ends of the housing cover 140. The cover axial end 146 defines the cover opening 143.

The cover attachment wall 149 of the housing cover 140 includes a plurality of guiding and positioning features (i.e., a plurality of cover inner notched portions 148a and a plurality of cover outer notched portions 148b) about the entire circumferential length or perimeter of the cover attachment wall 149, as shown in FIG. 6. The cover inner notched portions 148a are positioned radially inward relative to the cover outer notched portions 148b (and the cover outer notched portions 148b are positioned radially outward relative to the cover inner notched portions 148a). The cover inner notched portions 148a and the cover outer notched portions 148b are alternatively positioned about the circumferential length of the cover attachment wall 149 such the inner surface and the outer surface of the cover attachment wall 149 are intermittently stepped radially-inward and radially-outward about the entire length of the cover attachment wall 149. The cover inner notched portions 148a and the cover outer notched portions 148b may extend continuously (e.g., are attached to each other along their axial lengths) such that the cover attachment wall 149 extends continuously about the perimeter of the housing cover 140. The cover inner notched portions 148a and the cover outer notched portions 148b are configured to interlock with the inner extensions 188a and the outer extensions 188b of the frame 180 (as described further herein), with the inner extensions 188a and the outer extensions 188b positioned alternatively on opposite sides of the cover attachment wall 149.

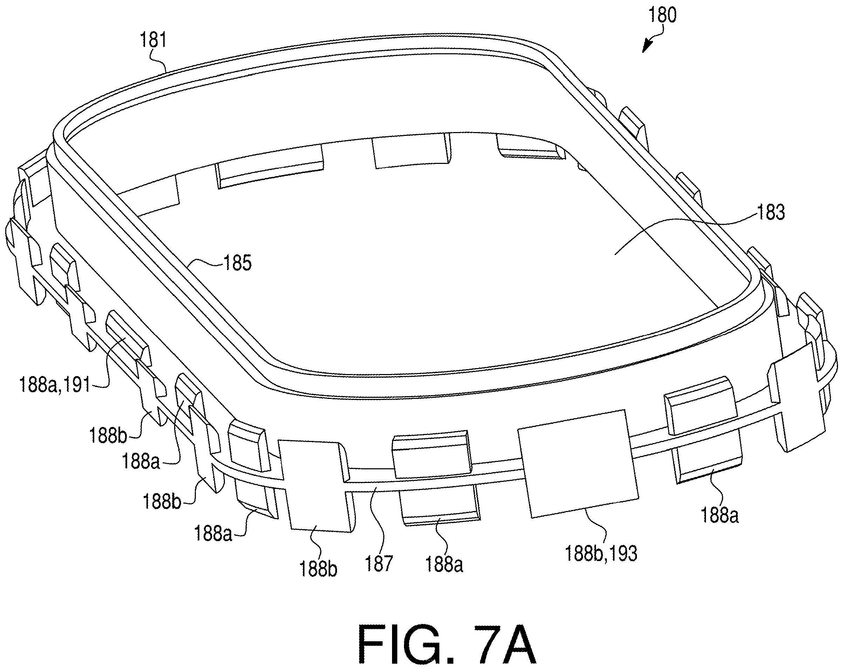

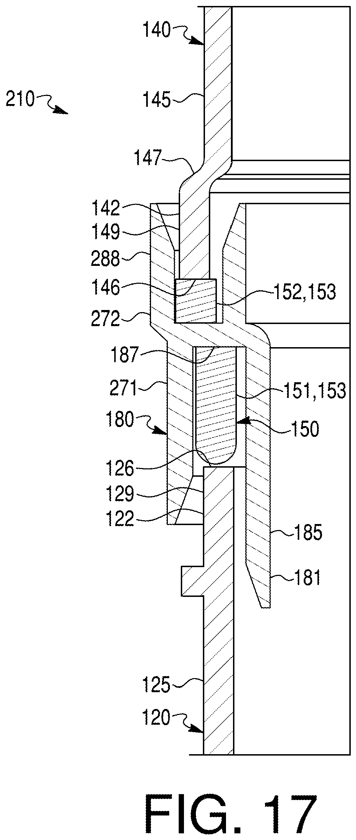

As shown in FIGS. 7A-8, the frame 180 comprises a frame body 181 and a gasket arrangement 150 (as described further herein). The frame body 181 is constructed as a single-piece and comprises a single, integral, unitary component that cannot be separated without destruction. The frame body 181 of the frame 180 may be a polymer support frame. The frame body 181 of the frame 180 comprises an axially-extending, inner wall 185 and a radially-extending ledge, lip, or flange 187, each of which extend circumferentially about the outer perimeter of the filter media 162. The inner tab, rib, or wall 185 extends axially along the outer surface of the filter media 162 (substantially parallel to the side wall 166 of the filter media 162) (as shown in FIG. 8) and circumferentially surrounds and defines the frame opening 183. At least a portion of the axial length of the filter media 162 (i.e., along the side wall 166) may be circumferentially surrounded by the inner wall 185. The inner wall 185 may extend axially above and below the flange 187 (as described further herein and shown in FIG. 17) or may be positioned along and extend from only one axial side of the flange 187 (as shown in FIG. 8). In particular, one axial end of the inner wall 185 is positioned along and extends axially from an inner radial end of the flange 187. The other axial end of the inner wall 185 abuts against an inner surface of one of the base lip 127 or the cover lip 147, depending on the configuration of the filter assembly (as shown in FIG. 8). The flange 187 extends radially outward from the inner wall 185, optionally from an axial end of the inner wall 185. The inner wall 185 may be positioned along only one axial side of or both axial sides of the flange 187. The flange 187 is positioned axially between the base attachment wall 129 and the cover attachment wall 149.

As shown in FIGS. 7A-7B, the frame body 181 of the frame 180 further comprises a plurality of guiding and positioning features (i.e., a plurality of axially-extending inner tabs or extensions 188a and a plurality of axially-extending outer tabs or extensions 188b) that are positioned intermittently along the flange 187 and align the frame 180 to the housing base 120 and/or the housing cover 140. The inner extensions 188a are positioned radially inward relative to the outer extensions 188b (and the outer extensions 188b are positioned radially outward relative to the inner extensions 188a). The inner extensions 188a and the outer extensions 188b are alternatively positioned about the circumferential length or perimeter of the flange 187. As shown in FIG. 7A, the inner extensions 188a and the outer extensions 188b extend axially above and below the flange 187, each with a first portion or axial end along one axial side of the flange 187 and a second portion or axial end along the other axial side of the flange 187. The inner extensions 188a and the outer extensions 188b are circumferentially spaced apart from each other (along the circumferential length or perimeter of the flange 187) and radially spaced apart (outwardly) from the inner wall 185 to provide room to receive the gasket arrangement 150 (as described further herein). Additionally, the inner extensions 188a and the outer extensions 188b extend axially substantially parallel to the inner wall 185. According to another embodiment, the inner extensions 188a and the outer extensions 188b may be connected to each other along their sides and extend continuously around the entire perimeter of the frame body 181 of the frame 180 and the housing assembly 112 (and the base inner notched portions 128a and the base outer notched portions 128b and the cover inner notched portions 148a and the cover outer notched portions 148b may alternatively be spaced apart from each other, respectively).

The inner extensions 188a and the outer extensions 188b prevent the filter assembly 110 from warping by, for example, directing (and maintaining) long, unsupported sections of the housing base 120 and the housing cover 140 into the proper position. In particular, the inner extensions 188a push and direct the warped housing base 120 and the warped housing cover 140 radially outward and into position, while the outer extensions 188b pull and direct the warped housing base 120 and the warped housing cover 140 radially inward and into position, thereby preventing or reducing warpage in both a radially inward direction and a radially outward direction.

The inner extensions 188a and the outer extensions 188b are configured to correspond to, align with, and interlock with the base attachment wall 129 and the cover attachment wall 149 (in particular to the base inner notched portions 128a, the base outer notched portions 128b, the cover inner notched portions 148a, and the cover outer notched portions 148b) of the housing base 120 and the housing cover 140, with the inner extensions 188a and the outer extensions 188b positioned alternatively on opposite sides of the base attachment wall 129 and the cover attachment wall 149. The size, number, and relative positioning of the inner extensions 188a and the outer extensions 188b and the base inner notched portions 128a, the base outer notched portions 128b, cover inner notched portions 148a, the cover outer notched portions 148b correspond with and complement each other to fit and interlock with each other. The base inner notched portions 128a and the base outer notched portions 128b of the housing base 120 directly align and interlock with the first axial end of the inner extensions 188a and the outer extensions 188b of the frame 180 (and not the housing cover 140). Similarly, the cover inner notched portions 148a and the cover outer notched portions 148b of the housing cover 140 directly align and interlock with the second axial end of the inner extensions 188a and the outer extensions 188b of the frame 180 (and not the housing base 120).

As shown in FIGS. 2A and 7B-8, when the housing base 120 and the housing cover 140 are attached to the frame 180, the frame 180 is positioned axially between and attached to the housing base 120 and the housing cover 140. The frame 180 is configured to engage with the base end portion 122 of the housing base 120 and the cover end portion 142 of the housing cover 140. For example, according to various embodiments, the base axial end 126 may engage with a first surface of the flange 187 of the frame body 181 and/or the cover axial end 146 may engage with a second surface (that is opposite the first surface) of the flange 187 of the frame body 181, as shown in FIG. 8. Alternatively or additionally, an axial end (or opposite axial ends) of the inner wall 185 of the frame body 181 may engage with an inner surface of the base lip 127 and/or an inner surface of the cover lip 147, as further shown in FIG. 8. Alternatively or additionally, an axial end (or opposite axial ends) of the gasket arrangement 150 may engage with (and form a seal with) the inner surface of the base lip 127 and/or the inner surface of the cover lip 147, as further shown in FIG. 8. Alternatively or additionally, the base axial end 126 may engage with (and form a seal with) a first axial end of the gasket arrangement 150 and/or the cover axial end 146 may engage with (and form a seal with) a second axial end (that is opposite the first axial end) of the gasket arrangement 150, as shown in FIG. 17 and described further herein.

As shown in FIGS. 2A and 7B-8, when the housing base 120 is attached to the frame 180, the base attachment wall 129 and the base axial end 126 of the housing base 120 extend along and are positioned and contained radially in between each of the inner extensions 188a and the outer extensions 188b. In particular, the base attachment wall 129 weaves between the first axial ends of the inner extensions 188a and the outer extensions 188b. The inner extensions 188a of the frame 180 are positioned and extend along the inner surface of the base outer notched portions 128b of the base attachment wall 129 of the housing base 120, and the outer extensions 188b of the frame 180 are positioned and extend along the outer surface of the base inner notched portions 128a of the base attachment wall 129 of the housing base 120, thereby interlocking the frame 180 and the housing base 120 together. The base outer notched portions 128b of the base attachment wall 129 extend along the front, radially outer surface of the inner extensions 188a, and the base inner notched portions 128a of the base attachment wall 129 extend along the back, radially inner surface of the outer extension 188b.

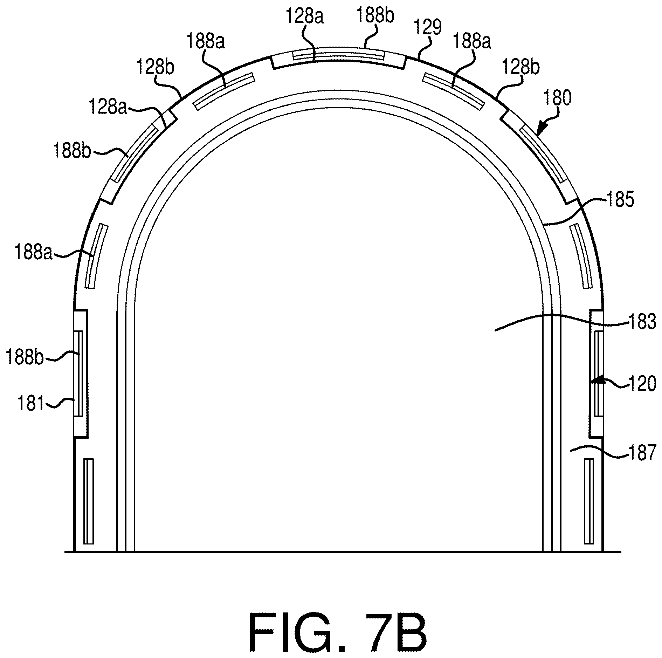

As shown in FIGS. 2A and 7B-8, when the housing cover 140 is attached to the frame 180, the cover attachment wall 149 and the cover axial end 146 of the housing cover 140 extend along and are positioned and contained radially in between each of the inner extensions 188a and the outer extensions 188b. (Although FIG. 7B shows the housing base 120 with the frame 180, the housing cover 140 is attached to the frame 180 in the same or a similar manner (along the opposite axial side of the frame 180).) In particular, the cover attachment wall 149 weaves between the second axial ends of the inner extensions 188a and the outer extensions 188b. The inner extensions 188a of the frame 180 are positioned and extend along the inner surface of the cover outer notched portions 148b of the cover attachment wall 149 of the housing cover 140, and the outer extensions 188b of the frame 180 are positioned and extend along the outer surface of the cover inner notched portions 148a of the cover attachment wall 149 of the housing cover 140, thereby interlocking the frame 180 and the housing cover 140 together. The cover outer notched portions 148b of the cover attachment wall 149 extend along the front, radially outer surface of the inner extensions 188a, and the cover inner notched portions 148a of the cover attachment wall 149 extend along the back, radially inner surface of the outer extension 188b.

As shown in FIGS. 2B and 7A, the axial height of the inner extensions 188a and the outer extensions 188b varies about the circumferential length or perimeter of the flange 187 to gradually and smoothly align the frame 180 with the housing base 120 and the housing cover 140. The height of the inner extensions 188a and the outer extensions 188b may gradually increase or decrease about the circumferential length or perimeter of the flange 187. The inner extensions 188a and the outer extensions 188b are shortest along the areas of the filter assembly 110 that are prone to the most warpage (i.e., along the center of the longest, straight walls). In particular, the inner extensions 188a and the outer extensions 188b that are along the rounded ends or shorter sides of the frame body 181 of the frame 180 (which correspond to the areas of the filter assembly 110 that have low or no warpage) are relatively axially taller or longer than the inner extensions 188a and the outer extensions 188b that are along the straight or longer sides of the frame body 181 of the frame 180 (which correspond to the areas of the filter assembly 110 that are prone to have more warpage). The shortest extension 191 and the longest extension 193 are labeled in FIG. 7A, according to one embodiment. During assembly, the longer inner extensions 188a and the longer outer extensions 188b engage with and extend around or along the base attachment wall 129 of the housing base 120 and the cover attachment wall 149 of the housing cover 140 first (along areas with low or no warpage), before the shorter inner extensions 188a and the shorter outer extensions 188b.

Due to the interlocking between the frame 180 and both the housing base 120 and the housing cover 140, improper filter elements (including, for example, various non-genuine filter elements) are not intended for installation with the housing base 120 or with the housing cover 140. Furthermore, the interlocking ensures that the frame 180 (and thus the entire filter element 160) is properly aligned and forms a complete seal with the housing base 120 and the housing cover 140. Without the frame 180 (which forms a seal with both the housing base 120 and the housing cover 140), the housing base 120 and the housing cover 140 cannot form a proper seal together.

As shown in FIG. 8, the frame 180 further comprises a sealing gasket assembly in the form of a gasket arrangement 150, for example. Due to the relative configuration of the gasket arrangement 150 and the frame body 181 of the frame 180, if the housing base 120 or the housing cover 140 can be engaged with the frame body 181 of the frame 180 (i.e., if the correct housing base 120 or housing cover 140 is attached to the frame 180), the gasket arrangement 150 will be in the proper sealing position. The gasket arrangement 150 allows the housing base 120, the housing cover 140, and the filter element 160 to compactly form a seal together while still aligning together and allowing the gasket arrangement 150 to extend outward. The axial ends of the gasket arrangement 150 may be rounded and/or flat, depending on the desired configuration.

At least a portion of the gasket arrangement 150 (such as the second portion 152) is positioned and extends along the flange 187 (above and/or below the flange 187), radially between the radially inner surfaces of the inner extensions 188a and the outer extensions 188b and the side wall 166 of the filter media 162. Depending on the configuration of the gasket arrangement 150, at least a portion of the gasket arrangement 150 (such as the first portion 151) may extend along and be positioned radially between the radially outer perimeter or surface of the inner wall 185 of the frame body 181 and the radially inner surfaces of the inner extensions 188a and the outer extensions 188b. The gasket arrangement 150 may extend continuously around the entire outer perimeter of the filter element 160. The axial ends or edges of the housing base 120 and the housing cover 140 (along the base inner notched portions 128a and the cover inner notched portions 148a, respectively) are positioned radially between the inner wall 185 and the outer extensions 188b and may directly abut against opposite axial surfaces of the flange 187.

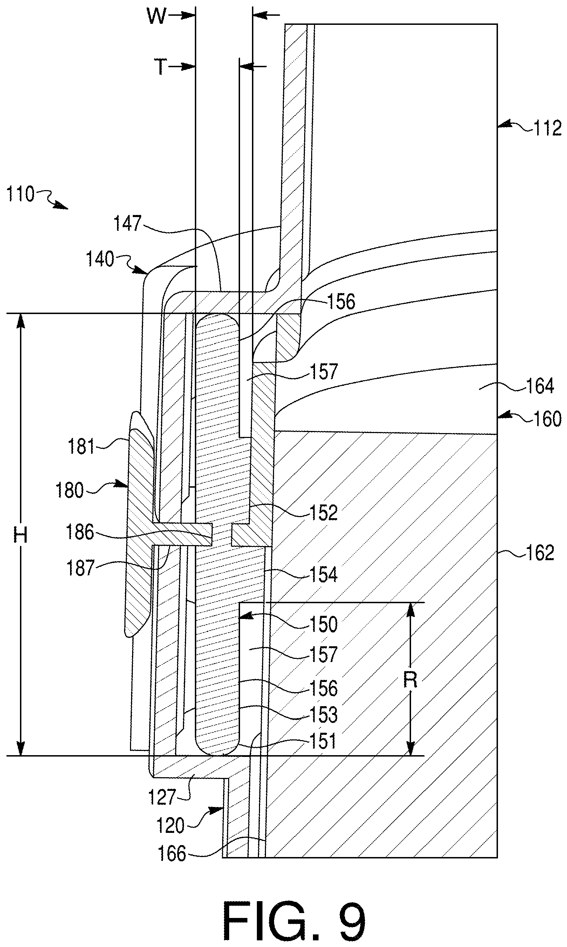

As shown in FIG. 8, the gasket arrangement 150 comprises a first section or portion 151 and a second section or portion 152 that are positioned along opposite sides of the flange 187. According to one embodiment (as shown in FIG. 9, for example), the gasket arrangement 150 comprises one gasket 153 including both the first portion 151 and the second portion 152. Accordingly, the flange 187 defines at least one aperture 186 extending axially through the flange 187, and the gasket 153 extends through the at least one aperture 186 and along both sides of the flange 187. According to another embodiment, the gasket arrangement 150 may comprise only one gasket 153 that is only positioned along one axial side of the flange 187 (and there is no gasket 153 on the other axial side of the flange 187). According to another embodiment (as shown in FIG. 8, for example), the gasket arrangement 150 comprises two individual gaskets 153 that are separately attached to opposite axial sides of the flange 187 of the frame body 181, where a first gasket 153 is the first portion 151, and a second gasket 153 is the second portion 152. The first gasket 153 may be a lower gasket, and the second gasket 153 may be an upper gasket.

The first portion 151 of the gasket arrangement 150 forms a seal between the frame body 181 of the frame 180 and the housing base 120. In particular, the first portion 151 extends axially between and forms an axial seal between the bottom surface (i.e., a first axial side) of the flange 187 of the frame body 181 and the top inner surface of the base lip 127 of the housing base 120. The second portion 152 of the gasket arrangement 150 forms a seal between the frame body 181 and the housing cover 140. In particular, the second portion 152 extends axially between and forms an axial seal between the top surface (i.e., a second axial side) of the flange 187 of the frame body 181 and the bottom inner surface of the cover lip 147 of the housing cover 140.

The gasket arrangement 150 may be molded (optionally individually) with a foamed polyurethane. The first portion 151 and the second portion 152 may be molded together or individually.

According to various embodiments, the gasket arrangement 150 may or may not protrude through the frame body 181. For example, according to one embodiment (as shown in FIG. 9, for example), the flange 187 of the frame body 181 may define at least one axially-extending opening through-hole, or aperture 186 to allow the gasket arrangement 150 (in particular the polyurethane) to blow and extend through the frame body 181 between two axial sides of the flange 187 and optionally up against and to the outer surface (e.g., the side wall 166) of the filter media 162. However, according to various embodiments, the gasket arrangement 150 may or may not adhere to the outer surface or the side wall 166 of the filter media 162. According to various embodiments, the frame body 181 may be separate adhered to the filter media 162 from the gasket arrangement 150 or alternatively may be attached to the filter media 162 through the gasket arrangement 150.

FIGS. 9-12 show various embodiments of the gasket arrangement 150. According to various embodiments (see, for example, FIG. 9), the gasket arrangement 150 extends axially between the lower inner surface of the cover lip 147 and the upper inner surface of the base lip 127. Accordingly, the axial height H of the entire gasket arrangement 150 (including both the first portion 151 and the second portion 152) may be approximately 40-60 millimeters (mm). The radial width W of the gasket arrangement 150 (along the base 154) may be approximately 4-10 mm. Accordingly, in particular embodiments, the ratio of the height H to width W of the gasket arrangement 150 may range between approximately 4 and 15, and is typically approximately 6 to 8.

The gasket arrangement 150 extends along at least the axial height of the frame body 181 and is relatively long and narrow (in accordance with the ratio of the height H to width W of the gasket arrangement 150) to allow the gasket arrangement 150 to compress more with less force. By being relatively long, the gasket arrangement 150 provides a high compression range to form a seal with warped parts and prevent leakage. The percentage that the gasket arrangement 150 can compress is limited and controlled. By being relatively narrow, the gasket arrangement 150 helps minimize the overall size and volume of the filter assembly 110.

The first portion 151 and the second portion 152 each comprise a base 154 extending axially directly from either the top surface or the bottom surface of the flange 187. As further shown in FIG. 9, the first portion 151 and the second portion 152 further comprise an extension 156 extending axially from the base 154 (in an axial direction away from the flange 187). The extension 156 is radially narrower than the base 154 to define a recess 157 along a radial side of the extension 156 of the first portion 151 or the second portion 152. With the two extensions 156 along the top and bottom of the gasket arrangement 150, the gasket arrangement 150 defines two recesses 157 (i.e., one recess on the top and one recess on the bottom of the gasket arrangement 150). The recess 157 on the bottom of the gasket arrangement 150 provides an area for the poured polyurethane to pool. Both the top and bottom recesses 157 provide room for the extension 156 to compress into. The radially inner side of the extensions 156 may be offset from the radially inner side of the base 154 such that the recesses 157 are positioned along a radially inner side of the extensions 156.

According to one embodiment, the radial width or thickness T of the extension 156 is approximately 2 to 8 mm, and the axial length R of the extension 156 (and thus the axial length of the recess 157) is approximately 2 to 30 mm. The thickness T of the extension 156 is small enough to outwardly limit a size increase of the extension 156, but large enough to create an adequate seal area.

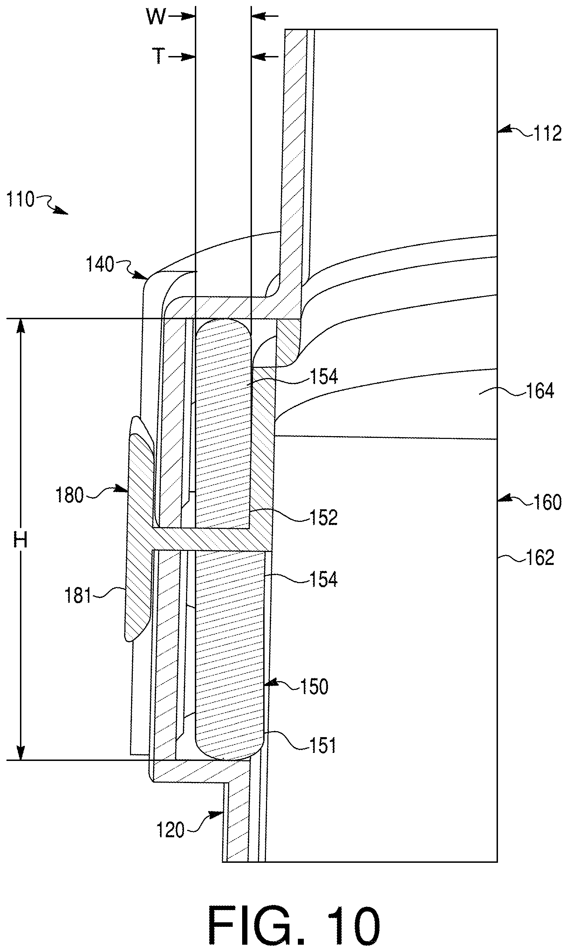

According to another embodiment as shown in FIG. 10, the first portion 151 and the second portion 152 do not include any extensions 156 (and therefore no recesses 157). Instead, the base 154 extends along the entire length of the first portion 151 and the second portion 152. Accordingly, the first portion 151 and the second portion 152 have a constant width W along their axial lengths, and the thickness T is equal to the width W.

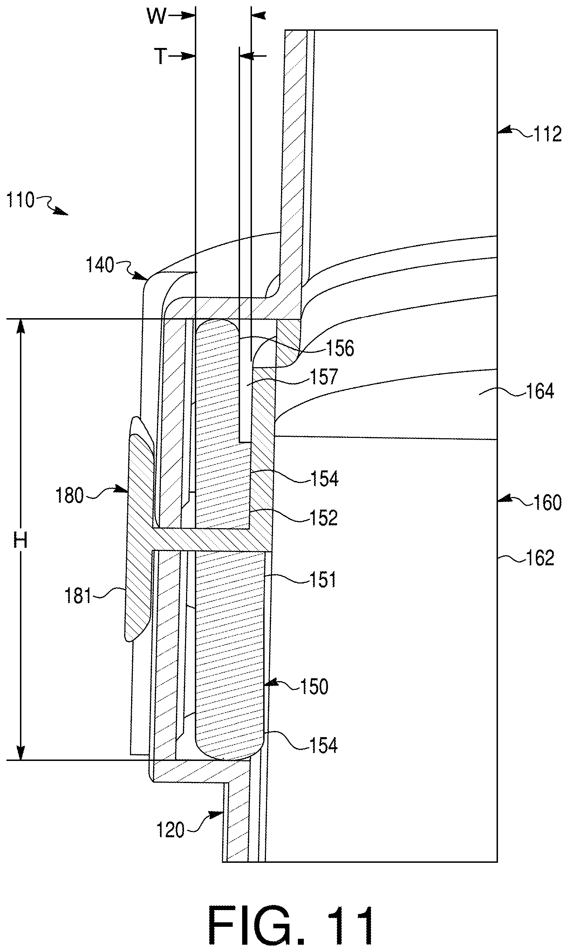

According to another embodiment as shown in FIG. 11, only one of the first portion 151 and the second portion 152 includes an extension 156 (and a resulting recess 157). The base 154 of the other of the first portion 151 and the second portion 152 extends along the entire length of the other of the first portion 151 and the second portion 152 (such that the other of the first portion 151 and the second portion 152 has a constant width W across its axial length).

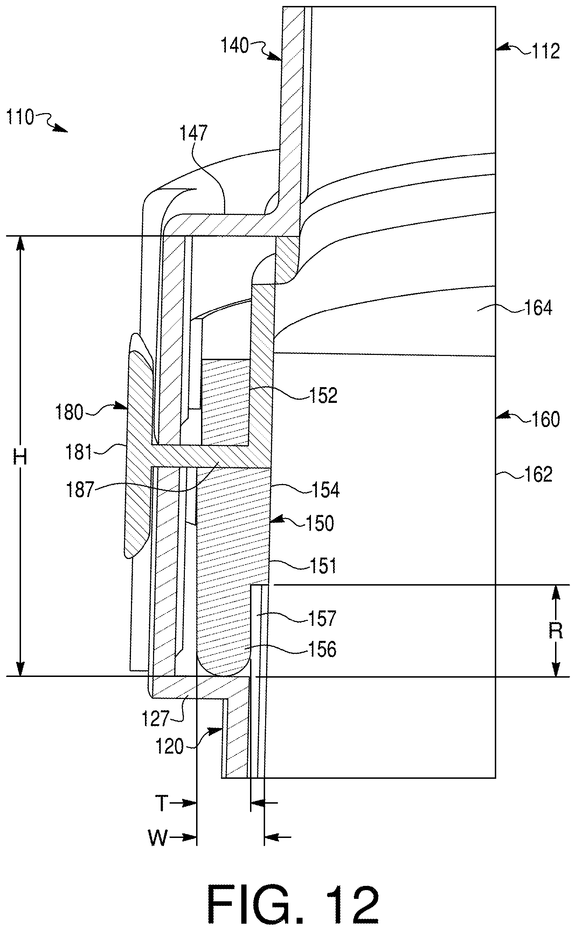

According to another embodiment as shown in FIG. 12, the gasket arrangement 150 only includes one of the first portion 151 and the second portion 152 (which may or may not include the extension 156 and the resulting recess 157). The gasket arrangement 150 may either not include any the other of the first portion 151 and the second portion 152 or may include only a portion of the axial length of the other of the first portion 151 and the second portion 152 (such that the other of the first portion 151 and the second portion 152 does not extend axially completely between the flange 187 and the base lip 127 of the housing base 120 or the cover lip 147 of the housing cover 140, respectively). Accordingly, the gasket arrangement 150 forms a seal between the frame body 181 and one of the housing base 120 and the housing cover 140, but does not form a seal between the frame body 181 and other of the housing base 120 or the housing cover 140. FIG. 12 shows an example in which the gasket arrangement 150 includes the first portion 151 and only a portion of the axial length of the second portion 152. In particular, in the embodiment of FIG. 12, the axial length of the second portion 152 is significantly less than the axial length of the first portion 151. For example, the axial length of the second portion 152 may be less than half of the axial length of the first portion 151. The second portion 152 does not extend all the way to the cover lip 147 of the housing cover 140. Accordingly, the gasket arrangement 150 of FIG. 12 forms a seal between the frame body 181 and the housing base 120, but does not form a seal between the frame body 181 and the housing cover 140.

According to various embodiments, a seal may be formed between the top of the housing base 120 and the bottom of the housing cover 140. However, according to various embodiments, if a seal is not desired between the frame 180 and the housing cover 140, a notch may be included along the axial length of the second portion 152 of the gasket arrangement 150.

In FIGS. 13-17, another filter assembly 210 is shown, according to another embodiment, which does not form part of the invention and is included to aid understanding of the invention only. Any of the aspects, features, components, benefits, and configurations of the filter assembly 110 and the filter assembly 210 may be used within the other of the filter assembly 110 and the filter assembly 210, except where noted otherwise. Like reference numbers are used with the filter assembly 210 where applicable. The filter assembly 210 comprises the housing assembly 112 (that includes the housing base 120 and the housing cover 140) and the filter element 160 (that includes the frame 180 and the filter media 162), as described further herein.

As shown in FIG. 13, the filter assembly 210 includes at least one fastener 230 that is configured to lock the housing base 120, the filter element 160, and the housing cover 140 together. Although the fastener 230 is shown as an over-center latch, the fastener 230 may be other types of fasteners, including but not limited to another type of latch, a clip, or a through-bolt. According to one embodiment, the filter assembly 210 includes four fasteners 230 positioned about the circumference of the filter assembly 210.

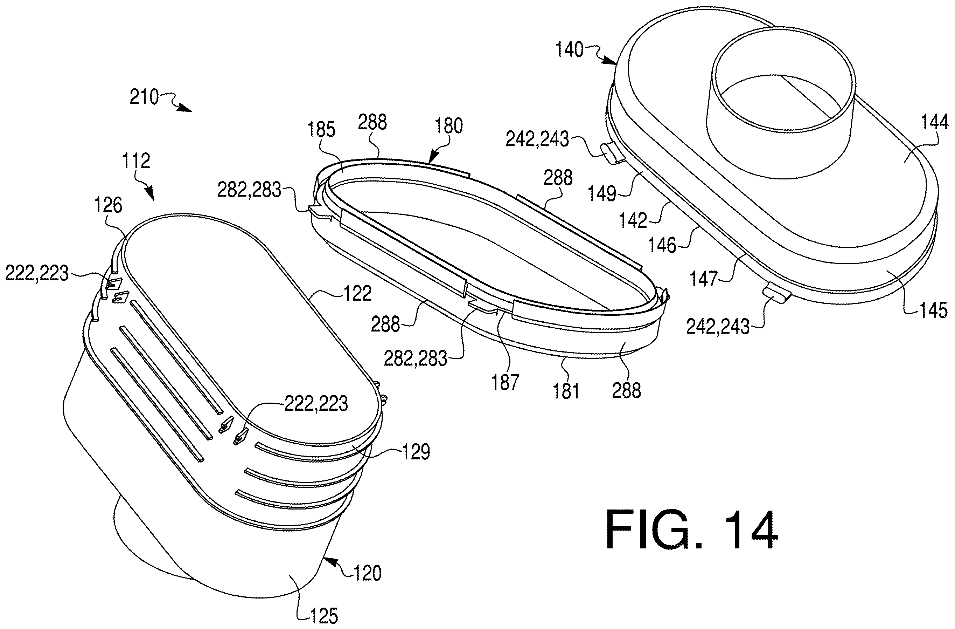

To provide an attachment area for the fastener 230 and the housing base 120, the housing base 120 further comprises a base fastener supporting component 222, the frame body 181 of the frame 180 further comprises a frame fastener supporting component 282, and the housing cover 140 further comprises a cover fastening supporting component 242 (as shown in FIG. 14). The base fastener supporting component 222, the frame fastener supporting component 282, and the cover fastening supporting component 242 together allow the fastener 230 to clamp the filter assembly 210 together. According to one embodiment, one of the base fastener supporting components 222 and the cover fastening supporting components 242 rotatably secures a first axial end of the fastener 230 to the housing base 120 or the housing cover 140, respectively, regardless of whether the fastener 230 is currently clamping the rest of the filter assembly 210 together. For example, the one of the base fastener supporting components 222 and the cover fastening supporting components 242 may be a fastening support arm 223. The fastening support arm 223 includes a notch. As shown in FIG. 14, the base fastener supporting component 222 of the housing base 120 is the fastening support arm 223 that is configured to rotatably secure the first axial end of the fastener 230 via the notch.

The other of the base fastener supporting components 222 and the cover fastening supporting components 242 comprises an attachment lip or tab 243 extending radially outward from the outer surface of the housing base 120 or the housing cover 140, respectively. The attachment tab 243 includes a notch such that the attachment tab 243 is configured to be received and secured by a second axial end of the fastener 230 (that is opposite the first axial end).

The fastener supporting component 282 of the frame 180 comprises a support tab 283 that is configured to axially support one axial side of the attachment tab 243 when the housing base 120, the frame 180, and the housing cover 140 are clamped together. The support tab 283 extends radially outward from the outer surface of the frame body 181 of the frame 180, in particular from the radially outer surface of the flange 187 of the frame body 181 of the frame 180. The support tab 283 is positioned in a gap 289 between two alignment ribs 288 (as described further herein). The support tab 283 is sandwiched axially between the base fastener supporting components 222 and the cover fastening supporting components 242 when the filter assembly 210 is assembled together.

The base fastener supporting component 222, the frame fastening supporting component 282, and the cover fastening supporting component 242 are complementary to each other and axially alignable with each other about the perimeter of the filter assembly 210. The base fastener supporting components 222, the frame fastening supporting component 282, and the cover fastening supporting component 242 are positioned along and extend radially from the outer perimeter of the housing base 120, the frame 180, and the housing cover 140 in order to position the fastener 230 along the outside of the housing base 120, the frame 180, and the housing cover 140. The housing base 120, the frame 180, and the housing cover 140 may each include a plurality of base fastener supporting components 222, a plurality of frame fastening supporting components 282, and a plurality of cover fastening supporting components 242, respectively, spaced apart about the perimeter of the housing base 120, the frame 180, and the housing cover 140 and axially alignable with each other.

To clamp the filter assembly 210 together, the housing base 120, the frame 180, and the housing cover 140 are positioned and nested with each other, and the fastener 230 is subsequently rotated (about the notch of the fastening support arm 223 that is one of the base fastener supporting components 222 and the cover fastening supporting components 242) to position the second axial end of the fastener 230 over and around the attachment tab 243 (that is the other of the base fastener supporting components 222 and the cover fastening supporting components 242). The fastener 230 is also concurrently positioned around the support tab 283 (i.e., the fastener supporting component 282). The fastener 230 can then be snapped or pushed radially inwardly and axially toward the fastening support arm 223, pulling the attachment tab 243 axially toward the support tab 283 and the fastening support arm 223 (and thereby clamping the housing base 120, the frame 180, and the housing cover 140 together).

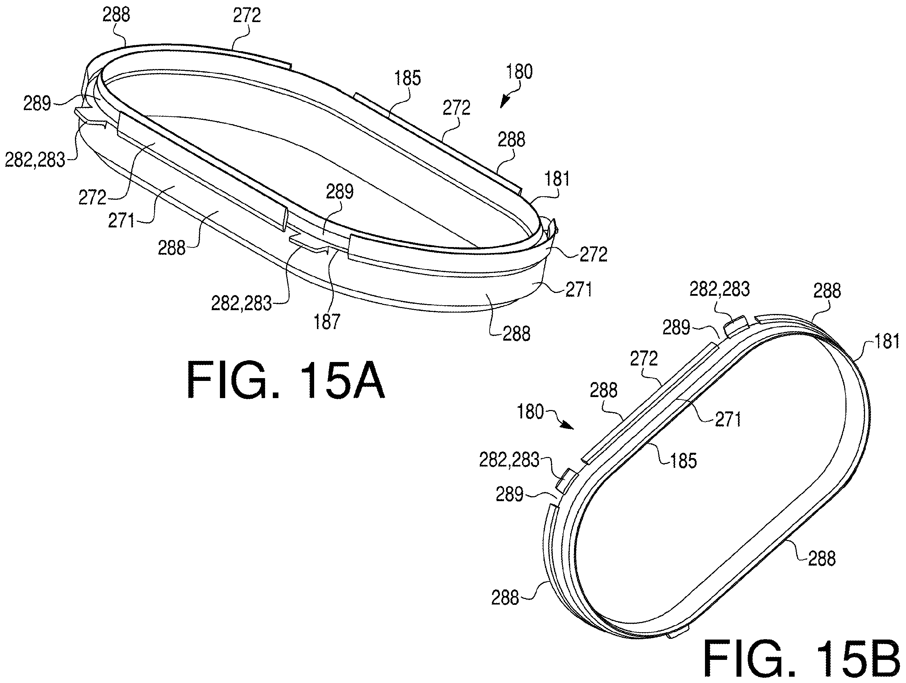

As shown in FIGS. 15A-15B, instead of having the alternating individual inner extensions 188a and the individual outer extensions 188b (as described further herein), the frame body 181 of the frame 180 may include at least one axially-extending positioning or alignment extension, tab, or rib 288 (which may also be referred to as an outer wall) that is the guiding and positioning features of the frame body 181 of the frame 180. The alignment ribs 288 are configured to align the frame 180 to the housing base 120 and/or the housing cover 140.

As shown in FIG. 17, the alignment ribs 288 extend axially from (and axially above and below) the flange 187. In particular, the alignment ribs 288 each include a first portion 271 (that is positioned below the flange 187 and extends axially from one axial side of the flange 187) and a second portion 272 (that is positioned above the flange 187 and extends axially from the other opposite axial side of the flange 187). The first portion 271 and the second portion 272 of the alignment rib 288 may optionally not be axially aligned with each other, but instead may be at least partially axially offset from each other.

The alignment rib 288 may extend around and circumscribe the entire circumferential length or perimeter of the frame body 181 of the frame 180. Alternatively, the frame body 181 of the frame 180 may include a plurality of alignment ribs 288 that together extend around and circumscribe the majority of the perimeter of the frame body 181. At least a portion of each of the alignment ribs 288 (in particular the second portions 272) are circumferentially spaced apart or separated from each other by at least one circumferential gap 289 that corresponds (in size and position) with the at least one fastener 230. The first portions 271 of each of the alignment ribs 288 may extend continuously around the entire circumferential length of perimeter of the frame body 181 (without any gaps). Accordingly, the gaps 289 do not extend axially along the entire axial length of the alignment ribs 288 (but instead extend axially along at least a portion of the length of the second portion 272. The alignment ribs 288 extend along areas of the frame body 181 that do not otherwise correspond to the fasteners 230. Each of the gaps 289 provide an area for a fastener 230 to extend between and clamp the base fastener supporting components 222 and the cover fastening supporting components 242 together. The fastener supporting component 282 is positioned within the gap 289 to align with the base fastener supporting components 222 and the cover fastening supporting components 242.

Each of the alignment ribs 288 extends continuously about the outer perimeter of the frame body 181 at a constant radial position (relative to the inner wall 185) and has a smooth inner surface and a smooth outer surface along the outer perimeter of the frame body 181 (rather than being notched or including any radially inward or outward portions). The alignment ribs 288 are radially spaced apart (outwardly) from the inner wall 185 (along the length of the flange 187) to provide room to receive the gasket arrangement 150 (as described further herein). Additionally, the alignment ribs 288 extend axially substantially parallel to the inner wall 185. Each of the alignment ribs 288 extends circumferentially at a constant radial distance from the inner wall 185 both along its own circumferential length and compared to the other alignment ribs 288.

As shown in FIG. 17, the inner wall 185 extends axially above and below the flange 187. Accordingly, the inner wall 185 includes a first portion (that is positioned below the flange 187 and extends axially from one axial side of the flange 187) and a second portion (that is positioned above the flange 187 and extends axially from the other axial side of the flange 187). The first portion and the second portion of the inner wall 185 may not be axially aligned with each other, but instead may be at least partially axially offset from each other. As further shown in FIG. 17, the axial height of the inner wall 185 (along each axial side of the flange 187) may be approximately equal to or longer than the axial height of the alignment ribs 288 (along one axial side of the flange 187).

As shown in FIG. 14, instead of having the base inner notched portions 128a, the base outer notched portions 128b, cover inner notched portions 148a, and the cover outer notched portions 148b (as described further herein), the base attachment wall 129 of the housing base 120 and the cover attachment wall 149 of the housing cover 140 each extend continuously about the outer perimeter of the housing base 120 and the housing cover 140, respectively, at a constant radial position (relative to the base main wall 125 and the cover main wall 145). The base attachment wall 129 and the cover attachment wall 149 each have a smooth inner surface and a smooth outer surface along the outer perimeter of the housing base 120 and the housing cover 140, respectively (rather than being notched or including any radially inward or outward portions). The housing base 120 and the housing cover 140 may or may not include the base lip 127 and the cover lip 147, respectively. For example, as shown in FIG. 17, the base attachment wall 129 of the housing base 120 is axially aligned with and a part of the base main wall 125. The cover attachment wall 149 of the housing cover 140 is partially axially offset from the base main wall 125 such that there is a shortened cover lip 147.

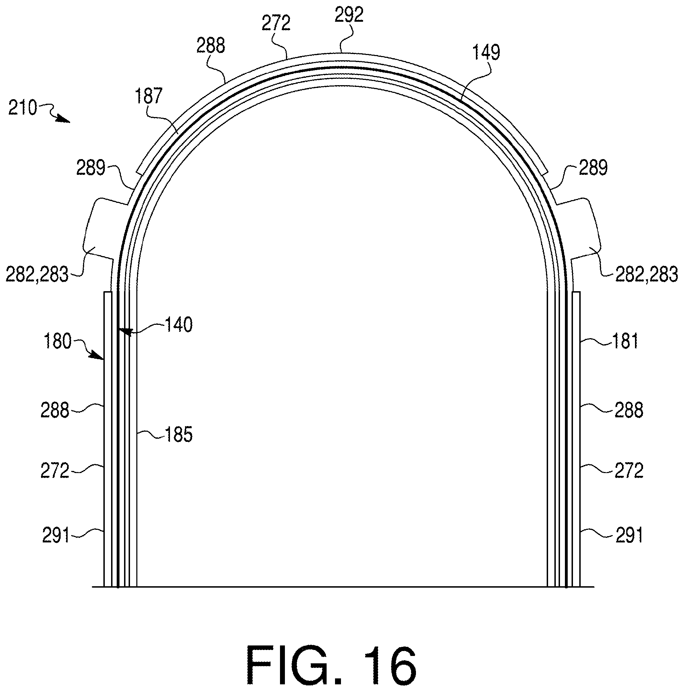

As shown in FIGS. 16-17, when the frame 180 is attached to the housing base 120 and the housing cover 140, the base axial end 126 of the base attachment wall 129 of the housing base 120 and the cover axial end 146 of the cover attachment wall 149 of the housing cover 140 (the base axial end 126 and the cover axial end 146 are shown in FIG. 17) are positioned and contained radially in between the alignment ribs 288 and the inner wall 185. (Although FIG. 16 shows the housing cover 140 attached to the frame 180, the housing base 120 is attached to the frame 180 in the same or a similar manner (along the opposite axial side of the frame 180).) Accordingly, the alignment ribs 288 and the inner wall 185 together prevent the filter assembly 210 from warping by, for example, moving sections of the housing base 120 and the housing cover 140 into the proper position. In particular, the alignment ribs 288 pull and direct the warped housing base 120 and the warped housing cover 140 radially inward and into position, while the inner wall 185 pushes and directs the warped housing base 120 and the warped housing cover 140 radially outward and into position, thereby preventing or reducing warpage in both a radially inward direction and a radially outward direction.

According to one embodiment as shown in FIGS. 15A-15B, the alignment ribs 288 extend at a constant, uniform axial distance or height from the flange 187 along the entire length of the alignment ribs 288 about the circumferential length of perimeter of the flange 187 (and along both axial sides of the flange 187). Furthermore, each of the alignment ribs 288 extend at the same axial height relative to each other. However, according to another embodiment, the axial height of the alignment ribs 288 may vary or slope (i.e., gradually increase or decrease) about the circumferential length or perimeter of the flange 187 such that each of the alignment ribs 288 has a different axial height and/or has different axial heights along their own circumferential length. This configuration allows the filter assembly 210 to be assembled more easily by gradually and smoothly aligning the frame 180 with the housing base 120 and the housing cover 140.

As shown in FIG. 16, the axially shortest portions 291 of the alignment ribs 288 are along the center of the straight or longer sides of the frame body 181 of the frame 180 (which correspond to the areas of the filter assembly 210 that are prone to have the most warpage). The axially longest portions 292 of the alignment ribs 288 are along the center of the circular or rounded ends or the shorter sides of the frame body 181 of the frame 180 (which correspond to the areas of the filter assembly 210 that have low or no warpage). During assembly, the longest portions 292 of the alignment ribs 288 engage with and extend around or along the base attachment wall 129 of the housing base 120 and the cover attachment wall 149 the housing cover 140 first (along areas with low or no warpage), before the shortest portions 291 of the alignment ribs 288.

As shown in FIG. 17, the frame 180 includes the gasket arrangement 150 (as described further herein). The gasket arrangement 150 is positioned radially between the inner wall 185 and the alignment ribs 288 and axially above and/or below the flange 187. However, instead of extending axially between the flange 187 and the base lip 127 or the cover lip 147 (as described further herein), the gasket arrangement 150 extends between and forms a seal between the flange 187 and the base axial end 126 of the housing base 120 or the housing cover 140 (which may also be positioned radially between the inner wall 185 and the alignment ribs 288). This configuration forms a seal between the base axial end 126 of the housing base 120, the gasket 153, and one axial side of the flange 187 and a seal between the cover axial end 146 of the housing cover 140, the gasket 153, and the other axial side of the flange 187. The axial ends of the housing base 120 and the housing cover 140 may optionally be axially offset from each other.

Each of the various embodiments disclosed herein may have any of the aspects, features, components, benefits, and configurations of the other embodiments, except where noted otherwise.

As utilized herein, the terms "approximately," "substantially," and similar terms are intended to have a broad meaning in harmony with the common and accepted usage by those of ordinary skill in the art to which the subject matter of this disclosure pertains. The terms "approximately" and "substantially" as used herein refers to ±5% of the referenced measurement, position, or dimension. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

The terms "coupled," "attached," and the like as used herein mean the joining of two members directly to one another. Such joining may be stationary (e.g., permanent) or moveable (e.g., removable or releasable).

References herein to the positions of elements (e.g., "top," "bottom," etc.) are merely used to describe the orientation of various elements in the FIGURES. It should be noted that the orientation of various elements may differ according to other exemplary embodiments, and that such variations are intended to be encompassed by the present disclosure.

It is important to note that the construction and arrangement of the various exemplary embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. For example, the position of elements may be reversed or otherwise varied, and the nature or number of discrete elements or positions may be altered or varied. The order or sequence of any processes may be varied or re-sequenced according to alternative embodiments. Other substitutions, modifications, changes and omissions may also be made in the design, operating conditions and arrangement of the various exemplary embodiments without departing from the scope of the present invention.

## Claims

1. A filter assembly (110, 210) comprising:
a filter element (160) comprising a filter media (162) and a frame (180), wherein the frame comprises a plurality of axially extending inner extensions (188a) and axially extending outer extensions (188b) such that the axially extending inner extensions (188a) and the axially extending outer extensions (188b) are positioned intermittently along a flange (187) of the frame (180); and
a housing assembly (112) containing the filter element, the housing assembly comprising a housing base (120) and a housing cover (140), the housing base comprising a base end portion (122), the housing cover comprising a cover end portion (142), wherein the housing base comprises a first plurality of positioning features (128a,b) and the housing cover comprises a second plurality of positioning features (148a,b),
the frame (180) secured to and surrounding at least an outer perimeter of the filter media (162), the frame positionable axially between and attachable to the housing base (120) and the housing cover (140) such that the frame engages with the base end portion (122) and the cover end portion (142) and the first and second plurality of positioning features (128a,b, 148a,b) interlock with the plurality of axially extending inner extensions (188a) and axially extending outer extensions (188b), and a seal is formed between the frame and at least one of the housing base or the housing cover.

2. The filter assembly of claim 1, wherein the housing base (120) comprises a first attachment wall (129) and the housing cover (140) comprises a second attachment wall (149), the first attachment wall and the second attachment wall each corresponding to and aligning with the plurality of axially extending inner extensions (188a) and axially extending outer extensions (188b) of the frame.

3. The filter assembly of claim 1, wherein a portion of the plurality of axially extending inner extensions (188a) and axially extending outer extensions (188b) extend axially along at least a portion of the outer perimeter of the at least one of the housing base (120) or the housing cover (140).

4. The filter assembly of claim 1, wherein a portion of the plurality of axially extending inner extensions (188a) and axially extending outer extensions (188b) extend axially along at least a portion of an inner perimeter of the at least one of the housing base (120) or the housing cover (140).

5. The filter assembly of claim 2, wherein the first attachment wall (129) and the second attachment wall (149) each include a plurality of positioning features, a first subset of the plurality of positioning features comprising an inner notched portion (128a, 148a) and a second subset of the plurality of positioning features having an outer notched portion (128b, 148b), the plurality of positioning features configured to interlock with the plurality of axially extending inner extensions (188a) and axially extending outer extensions (188b).

6. The filter assembly of claim 1, wherein the frame (180) comprises at least one alignment rib (288) extending circumferentially around the frame, the at least one alignment rib aligning the frame with the at least one of the housing base (120) and the housing cover (140).

7. The filter assembly of claim 1, wherein the at least one of the housing base (120) and the housing cover (140) comprises a lip (127, 147) extending radially outward from an axial end of the at least one of the housing base and the housing cover so as to abut an inner wall of the frame (180).

8. The filter assembly of claim 1, wherein the housing assembly (112) further comprises
a fastener (230); and the filter assembly further comprises:
a fastener supporting component (222, 242) coupled to the at least one of the housing base (120) and the housing cover (140), wherein the fastener supporting component comprises an attachment tab (243) that extends outwardly from an outer surface of the at least one of the housing base or the housing cover, the attachment tab comprising a first notch;
wherein the frame (180) is positionable axially between and attachable to the housing base (120) and the housing cover (140) such that the first notch receives and secures the fastener (230).

9. The filter assembly of claim 8, wherein the attachment tab (243) extends radially from the outer surface of the at least one of the housing base (120) and the housing cover (140), and wherein the first notch receives at least one of a first axial end or a second axial end of the fastener (230) so as to secure the fastener to the attachment tab.

10. The filter assembly of claim 9, wherein the filter assembly further comprises a frame fastener supporting component (282), the frame fastener supporting component comprising a support tab (283) extending radially outward from an outer surface of the frame, the support tab axially supporting the attachment tab (243) when the frame, the housing base (120), and the housing cover (140) are coupled together.

11. The filter assembly of claim 8, wherein the fastener comprises a first axial end and a second axial end, and
wherein the fastener supporting component comprises a fastening support arm (223) extending radially outward on the outer surface of the at least one of the housing base (120) and the housing cover (140), the fastening support arm comprising a second notch, at least one of the first axial end and the second axial end of the fastener securing within the second notch so as to facilitate rotation of the fastener.

12. The filter assembly of claim 8, wherein the housing base (120) comprises a base fluid port (121) and the housing cover comprises a cover fluid port (141), the base fluid port and the cover fluid port facilitating flow of fluid to and from the filter assembly.

13. A filter element comprising:
a filter media (162); and
a frame (180) that comprises a plurality of axially extending inner extensions (188a) and axially extending outer extensions (188b), wherein the frame (180) further includes a flange (187) extending radially and circumferentially about the outer perimeter of the filter media (162), the flange including the plurality of axially extending inner extensions (188a) and axially extending outer extensions (188b), such that the axially extending inner extensions and the axially extending outer extensions are positioned intermittently along the flange, the frame being secured to and surrounding at least an outer perimeter of the filter media,
wherein the frame is positionable axially between and attachable to a housing base (120) and a housing cover (140) of a housing assembly (122) such that the frame engages with a base end portion (122) of the housing base and a cover end portion (142) of the housing cover and the plurality of axially extending inner extensions (188a) and axially extending outer extensions (188b) are configured to interlock with a second plurality of positioning features of the housing base (120) and with a third plurality of positioning features of the housing cover (140), the filter media is contained within the housing assembly, and a seal is formed between the frame and at least one of the housing base and the housing cover.

14. The filter element of claim 13, wherein the plurality of axially extending inner extensions (188a) and axially extending outer extensions (188b) extends axially above and axially below the flange (187).

15. The filter element of claim 13, wherein the seal is formed by a gasket (150) engaging the frame (180) and the at least one of the housing base (120) and the housing cover (140), the gasket positioned and extended radially along the flange (187) between inner surfaces of the plurality of axially extending inner extensions (188a) and axially extending outer extensions (188b); wherein optionally
the gasket (150) comprises a first portion positioned on a first side of the flange (187) and a second portion positioned on a second side of the flange, the first side of the flange opposite to the second side of the flange, the first portion of the gasket configured to form a first seal between the frame (180) and the housing base (120) and the second portion of the gasket configured to form a second seal between the frame and the housing cover (140).

## Patentansprüche

1. Filteranordnung (110, 210), umfassend:
ein Filterelement (160), das ein Filtermedium (162) und einen Rahmen (180) umfasst, wobei der Rahmen eine Vielzahl von axial verlaufenden inneren Ausbuchtungen (188a) und axial verlaufenden äußeren Ausbuchtungen (188b) umfasst, so dass die axial verlaufenden inneren Ausbuchtungen (188a) und die axial verlaufenden äußeren Ausbuchtungen (188b) abschnittweise entlang eines Flansches (187) des Rahmens (180) angeordnet sind; und
eine Gehäuseanordnung (112), die das Filterelement enthält, wobei die Gehäuseanordnung einen Gehäuseboden (120) und einen Gehäusedeckel (140) umfasst, der Gehäuseboden einen Bodenendabschnitt (122) umfasst, der Gehäusedeckel einen Deckelendabschnitt (142) umfasst, wobei der Gehäuseboden eine erste Vielzahl von Positionierungselementen (128a, b) umfasst und der Gehäusedeckel eine zweite Vielzahl von Positionierungselementen (148a, b) umfasst,
der Rahmen (180) an mindestens einem äußeren Umfang des Filtermediums (162) befestigt ist und dieses umschließt, der Rahmen axial zwischen dem Gehäuseboden (120) und dem Gehäusedeckel (140) positionierbar ist und an diesen befestigbar ist, sodass der Rahmen mit dem Bodenendabschnitt (122) und dem Deckelendabschnitt (142) in Eingriff kommt und die erste und zweite Vielzahl von Positionierungselementen (128a,b, 148a,b) mit der Vielzahl von axial verlaufenden inneren Ausbuchtungen (188a) und axial verlaufenden äußeren Ausbuchtungen (188b) verzahnt sind, und zwischen dem Rahmen und mindestens einem von dem Gehäuseboden oder dem Gehäusedeckel eine Abdichtung gebildet ist.

2. Filteranordnung nach Anspruch 1, wobei der Gehäuseboden (120) eine erste Befestigungswand (129) umfasst und der Gehäusedeckel (140) eine zweite Befestigungswand (149) umfasst, wobei die erste Befestigungswand und die zweite Befestigungswand jeweils der Vielzahl von axial verlaufenden inneren Ausbuchtungen (188a) und axial verlaufenden äußeren Ausbuchtungen (188b) des Rahmens entsprechen und mit diesen ausgerichtet sind.

3. Filteranordnung nach Anspruch 1, wobei sich ein Abschnitt der Vielzahl von axial verlaufenden inneren Ausbuchtungen (188a) und axial verlaufenden äußeren Ausbuchtungen (188b) axial entlang mindestens eines Abschnitts des äußeren Umfangs des mindestens einen von dem Gehäuseboden (120) oder dem Gehäusedeckel (140) erstreckt.

4. Filteranordnung nach Anspruch 1, wobei sich ein Abschnitt der Vielzahl von axial verlaufenden inneren Ausbuchtungen (188a) und axial verlaufenden äußeren Ausbuchtungen (188b) axial entlang mindestens eines Abschnitts eines inneren Umfangs des mindestens einen von dem Gehäuseboden (120) oder dem Gehäusedeckel (140) erstreckt.

5. Filteranordnung nach Anspruch 2, wobei die erste Befestigungswand (129) und die zweite Befestigungswand (149) jeweils eine Vielzahl von Positionierungselementen einschließen, wobei eine erste Teilmenge der Vielzahl von Positionierungselementen einen inneren gekerbten Abschnitt (128a, 148a) umfasst und eine zweite Teilmenge der Vielzahl von Positionierungselementen einen äußeren gekerbten Abschnitt (128b, 148b) aufweist, wobei die Vielzahl von Positionierungselementen so konfiguriert ist, dass sie mit der Vielzahl von axial verlaufenden inneren Ausbuchtungen (188a) und axial verlaufenden äußeren Ausbuchtungen (188b) verzahnt ist.

6. Filteranordnung nach Anspruch 1, wobei der Rahmen (180) mindestens eine Ausrichtungsrippe (288) umfasst, die den Rahmen in Umfangsrichtung umgibt, wobei die mindestens eine Ausrichtungsrippe den Rahmen mit dem mindestens einen von dem Gehäuseboden (120) und dem Gehäusedeckel (140) ausrichtet.

7. Filteranordnung nach Anspruch 1, wobei der mindestens eine von dem Gehäuseboden (120) und dem Gehäusedeckel (140) eine Lippe (127, 147) umfasst, die sich von einem axialen Ende des mindestens einen von dem Gehäuseboden und dem Gehäusedeckel radial nach außen erstreckt, um an einer Innenwand des Rahmens (180) anzuliegen.

8. Filteranordnung nach Anspruch 1, wobei die Gehäuseanordnung (112) weiter ein Befestigungselement (230) umfasst; und die Filteranordnung weiter Folgendes umfasst:
ein Befestigungselement-Stützteil (222, 242), das mit dem mindestens einen von dem Gehäuseboden (120) und dem Gehäusedeckel (140) verbunden ist, wobei das Befestigungselement-Stützteil eine Befestigungslasche (243) umfasst, die sich von einer Außenfläche des mindestens einen von dem Gehäuseboden oder dem Gehäusedeckel nach außen erstreckt, wobei die Befestigungslasche eine erste Kerbe umfasst;
wobei der Rahmen (180) axial zwischen dem Gehäuseboden (120) und dem Gehäusedeckel (140) positionierbar und an diesen befestigbar ist, sodass die erste Kerbe das Befestigungselement (230) aufnimmt und befestigt.

9. Filteranordnung nach Anspruch 8, wobei sich die Befestigungslasche (243) radial von der Außenfläche des mindestens einen von dem Gehäuseboden (120) und dem Gehäusedeckel (140) erstreckt und wobei die erste Kerbe mindestens eines vom einem ersten axialen Ende oder einem zweiten axialen Ende des Befestigungselements (230) aufnimmt, um das Befestigungselement an der Befestigungslasche zu befestigen.

10. Filteranordnung nach Anspruch 9, wobei die Filteranordnung weiter ein Rahmenbefestigungselement-Stützteil (282) umfasst, wobei das Rahmenbefestigungselement-Stützteil eine Stützlasche (283) umfasst, die sich radial von einer Außenfläche des Rahmens nach außen erstreckt, wobei die Stützlasche die Befestigungslasche (243) axial stützt, wenn der Rahmen, der Gehäuseboden (120) und der Gehäusedeckel (140) miteinander verbunden sind.

11. Filteranordnung nach Anspruch 8, wobei das Befestigungselement ein erstes axiales Ende und ein zweites axiales Ende umfasst, und
wobei das Befestigungselement-Stützteil einen Befestigungselement-Stützarm (223) umfasst, der sich radial nach außen auf der Außenfläche des mindestens einen von dem Gehäuseboden (120) und dem Gehäusedeckel (140) erstreckt, wobei der Befestigungselement-Stützarm eine zweite Kerbe umfasst, wobei mindestens eines von dem ersten axialen Ende und dem zweiten axialen Ende des Befestigungselements innerhalb der zweiten Kerbe befestigt ist, um die Drehung des Befestigungselements zu erleichtern.

12. Filteranordnung nach Anspruch 8, wobei der Gehäuseboden (120) einen Boden-Flüssigkeitsanschluss (121) umfasst und der Gehäusedeckel einen Deckel-Flüssigkeitsanschluss (141) umfasst, wobei der Boden-Flüssigkeitsanschluss und der Deckel-Flüssigkeitsanschluss den Fluss von Flüssigkeit zu und von der Filteranordnung erleichtern.

13. Filterelement, umfassend:
ein Filtermedium (162); und
einen Rahmen (180), der eine Vielzahl von axial verlaufenden inneren Ausbuchtungen (188a) und axial verlaufenden äußeren Ausbuchtungen (188b) umfasst, wobei der Rahmen (180) weiter einen Flansch (187) einschließt, der sich radial und in Umfangsrichtung um den äußeren Umfang des Filtermediums (162) erstreckt, wobei der Flansch die Vielzahl von axial verlaufenden inneren Ausbuchtungen (188a) und axial verlaufenden äußeren Ausbuchtungen (188b) einschließt, so dass die axial verlaufenden inneren Ausbuchtungen und die axial verlaufenden äußeren Ausbuchtungen abschnittsweise entlang des Flansches angeordnet sind, wobei der Rahmen an mindestens einem äußeren Umfang des Filtermediums befestigt ist und dieses umschließt,
wobei der Rahmen axial zwischen einem Gehäuseboden (120) und einem Gehäusedeckel (140) einer Gehäuseanordnung (122) positionierbar und an diesen befestigbar ist, sodass der Rahmen mit einem Bodenendabschnitt (122) des Gehäusebodens und einem Deckelendabschnitt (142) des Gehäusedeckels in Eingriff kommt und die Vielzahl von axial verlaufenden inneren Ausbuchtungen (188a) und axial verlaufenden äußeren Ausbuchtungen (188b) so konfiguriert sind, dass sie mit einer zweiten Vielzahl von Positionierungselementen des Gehäusebodens (120) und mit einer dritten Vielzahl von Positionierungselementen des Gehäusedeckels (140) verzahnt sind, das Filtermedium innerhalb der Gehäuseanordnung enthalten ist und eine Abdichtung zwischen dem Rahmen und mindestens einem von dem Gehäuseboden und dem Gehäusedeckel gebildet wird.

14. Filterelement nach Anspruch 13, wobei sich die Vielzahl von axial verlaufenden inneren Ausbuchtungen (188a) und axial verlaufenden äußeren Ausbuchtungen (188b) axial oberhalb und axial unterhalb des Flansches (187) erstreckt.

15. Filterelement nach Anspruch 13, wobei die Abdichtung durch eine Dichtung (150) gebildet wird, die mit dem Rahmen (180) und dem mindestens einen von dem Gehäuseboden (120) und dem Gehäusedeckel (140) in Eingriff kommt und diese umschließt, wobei die Dichtung radial entlang des Flansches (187) zwischen den Innenflächen der Vielzahl von axial verlaufenden inneren Ausbuchtungen (188a) und axial verlaufenden äußeren Ausbuchtungen (188b) angeordnet und erstreckt ist; wobei optional
die Dichtung (150) einen ersten Abschnitt umfasst, der auf einer ersten Seite des Flansches (187) angeordnet ist, und einen zweiten Abschnitt, der auf einer zweiten Seite des Flansches angeordnet ist, wobei die erste Seite des Flansches der zweiten Seite des Flansches gegenüberliegt, der erste Abschnitt der Dichtung so konfiguriert ist, dass er eine erste Abdichtung zwischen dem Rahmen (180) und dem Gehäuseboden (120) bildet, und der zweite Abschnitt der Dichtung so konfiguriert ist, dass er eine zweite Abdichtung zwischen dem Rahmen und dem Gehäusedeckel (140) bildet.

## Revendications

1. Ensemble de filtre (110, 210), comprenant :
un élément de filtre (160) comprenant un support filtrant (162) et un cadre (180), dans lequel le cadre comprend une pluralité d'extensions intérieures s'étendant axialement, (188a) et d'extensions extérieures s'étendant axialement (188b), de sorte que les extensions intérieures s'étendant axialement (188a) et les extensions extérieures s'étendant axialement (188b) soient positionnées de manière intermittente le long d'une bride (187) du cadre (180) ; et
un ensemble de boîtier (112) contenant l'élément de filtre, l'ensemble de boîtier comprenant une base de boîtier (120) et un couvercle de boîtier (140), la base de boîtier comprenant une partie d'extrémité de base (122), le couvercle de boîtier comprenant une partie d'extrémité de couvercle (142), dans lequel la base de boîtier comprend une première pluralité de dispositifs de positionnement (128a, b) et le couvercle de boîtier comprend une deuxième pluralité de dispositifs de positionnement (148a, b),
le cadre (180) fixé à et entourant au moins un périmètre extérieur du support filtrant (162), le cadre positionnable axialement entre et pouvant être fixé à la base du boîtier (120) et au couvercle du boîtier (140) de sorte que le cadre se mette en prise avec la partie d'extrémité de la base (122) et la partie d'extrémité du couvercle (142) et que la première et la deuxième pluralité de dispositifs de positionnement (128a,b, 148a,b) s'emboîtent avec la pluralité d'extensions intérieures s'étendant axialement (188a) et d'extensions extérieures s'étendant axialement (188b), et une étanchéité est assurée entre le cadre et au moins un élément pari la base du boîtier ou le couvercle du boîtier.

2. Ensemble de filtre selon la revendication 1, dans lequel la base du boîtier (120) comprend une première paroi de fixation (129) et le couvercle du boîtier (140) comprend une deuxième paroi de fixation (149), la première paroi de fixation et la deuxième paroi de fixation correspondant et s'alignant chacune avec la pluralité d'extensions intérieures s'étendant axialement (188a) et d'extensions extérieures s'étendant axialement (188b) du cadre.

3. Ensemble de filtre selon la revendication 1, dans lequel une partie de la pluralité d'extensions internes s'étendant axialement (188a) et d'extensions externes s'étendant axialement (188b) s'étend axialement le long d'au moins une partie du périmètre extérieur de l'au moins un élément parmi la base du boîtier (120) ou le couvercle du boîtier (140).

4. Ensemble de filtre selon la revendication 1, dans lequel une partie de la pluralité d'extensions intérieures s'étendant axialement (188a) et d'extensions extérieures s'étendant axialement (188b) s'étend axialement le long d'au moins une partie d'un périmètre intérieur de l'au moins un élément parmi la base du boîtier (120) ou le couvercle du boîtier (140).

5. Ensemble de filtre selon la revendication 2, dans lequel la première paroi de fixation (129) et la deuxième paroi de fixation (149) incluent chacune une pluralité de dispositifs de positionnement, un premier sous-ensemble de la pluralité de dispositifs de positionnement comprenant une partie intérieure crantée (128a, 148a) et un deuxième sous-ensemble de la pluralité de dispositifs de positionnement présentant une partie extérieure crantée (128b, 148b), la pluralité de dispositifs de positionnement étant configurés pour s'emboîter avec la pluralité d'extensions intérieures s'étendant axialement (188a) et d'extensions extérieures s'étendant axialement (188b).

6. Ensemble de filtre selon la revendication 1, dans lequel le cadre (180) comprend au moins une nervure d'alignement (288) s'étendant circonférentiellement autour du cadre, l'au moins une nervure d'alignement alignant le cadre avec l'au moins un élément parmi la base du boîtier (120) et le couvercle du boîtier (140).

7. Ensemble de filtre selon la revendication 1, dans lequel au moins l'un parmi la base du boîtier (120) et le couvercle du boîtier (140) comprend un rebord (127, 147) s'étendant radialement vers l'extérieur à partir d'une extrémité axiale de l'au moins un parmi la base du boîtier et le couvercle du boîtier de manière à venir en butée contre une paroi intérieure du cadre (180).

8. Ensemble de filtre selon la revendication 1, dans lequel l'ensemble de boîtier (112) comprend en outre une fixation (230) ; et l'ensemble de filtre comprend en outre :
un composant de support de fixation (222, 242) couplé à l'au moins un parmi la base du boîtier (120) et le couvercle du boîtier (140), dans lequel le composant de support de fixation comprend une languette de fixation (243) qui s'étend vers l'extérieur à partir d'une surface extérieure de l'au moins un parmi la base du boîtier ou le couvercle du boîtier, la languette de fixation comprenant une première encoche ;
dans lequel le cadre (180) est positionnable axialement entre et fixé à la base du boîtier (120) et au couvercle du boîtier (140) de sorte que la première encoche reçoive et fixe la fixation (230).

9. Ensemble de filtre selon la revendication 8, dans lequel la languette de fixation (243) s'étend radialement à partir de la surface extérieure de l'au moins un élément parmi la base du boîtier (120) et le couvercle du boîtier (140), et dans lequel la première encoche reçoit au moins une parmi une première extrémité axiale ou une deuxième extrémité axiale de la fixation (230) afin de fixer la fixation à la languette de fixation.

10. Ensemble de filtre selon la revendication 9, dans lequel l'ensemble de filtre comprend en outre un composant de support de fixation de cadre (282), le composant de support de fixation de cadre comprenant une languette de support (283) s'étendant radialement vers l'extérieur à partir d'une surface extérieure du cadre, la languette de support supportant axialement la languette de fixation (243) lorsque le cadre, la base du boîtier (120) et le couvercle du boîtier (140) sont couplés ensemble.

11. Ensemble de filtre selon la revendication 8, dans lequel la fixation comprend une première extrémité axiale et une deuxième extrémité axiale, et
dans lequel le composant de support de fixation comprend un bras de support de fixation (223) s'étendant radialement vers l'extérieur sur la surface extérieure de l'au moins un élément parmi la base du boîtier (120) et le couvercle du boîtier (140), le bras de support de fixation comprenant une deuxième encoche, au moins une de la première extrémité axiale et de la deuxième extrémité axiale de la fixation se fixant dans la deuxième encoche afin de faciliter la rotation de la fixation.

12. Ensemble de filtre selon la revendication 8, dans lequel la base du boîtier (120) comprend un orifice de fluide de base (121) et le couvercle du boîtier comprend un orifice de fluide de couvercle (141), l'orifice de fluide de base et l'orifice de fluide de couvercle facilitant l'écoulement du fluide vers et depuis l'ensemble de filtre.

13. Élément de filtre comprenant :
un support filtrant (162) ; et
un cadre (180) comprenant une pluralité d'extensions intérieures s'étendant axialement (188a) et d'extensions extérieures s'étendant axialement (188b), dans lequel le cadre (180) inclut en outre une bride (187) s'étendant radialement et circonférentiellement autour du périmètre extérieur du support filtrant (162), la bride incluant la pluralité d'extensions intérieures s'étendant axialement (188a) et d'extensions extérieures s'étendant axialement (188b), de sorte que les extensions intérieures s'étendant axialement et les extensions extérieures s'étendant axialement soient positionnées de manière intermittente le long de la bride, le cadre étant fixé et entourant au moins un périmètre extérieur du support filtrant,
dans lequel le cadre est positionnable axialement entre et fixé à une base de boîtier (120) et à un couvercle de boîtier (140) d'un ensemble de boîtier (122) de sorte que le cadre se mette en prise avec une partie d'extrémité de base (122) de la base de boîtier et une partie d'extrémité de couvercle (142) du couvercle de boîtier et la pluralité d'extensions intérieures axiales s'étendant axialement (188a) et d'extensions extérieures axiales s'étendant axialement (188b) sont configurées pour s'emboîter avec une deuxième pluralité de dispositifs de positionnement de la base de boîtier (120) et avec une troisième pluralité de dispositifs de positionnement du couvercle de boîtier (140), le support filtrant est contenu à l'intérieur de l'ensemble de boîtier et une étanchéité est assurée entre le cadre et au moins un parmi la base de boîtier et le couvercle de boîtier.

14. Élément de filtre selon la revendication 13, dans lequel la pluralité d'extensions intérieures s'étendant axialement (188a) et d'extensions extérieures s'étendant axialement (188b) s'étendent axialement au-dessus et axialement en dessous de la bride (187).

15. Élément de filtre selon la revendication 13, dans lequel l'étanchéité est assurée par un joint (150) se mettant en prise entre le cadre (180) et l'au moins un parmi la base du boîtier (120) et le couvercle du boîtier (140), le joint étant positionné et s'étendant radialement le long de la bride (187) entre des surfaces intérieures de la pluralité d'extensions intérieures s'étendant axialement (188a) et d'extensions extérieures s'étendant axialement (188b) ; dans lequel, en option,
le joint (150) comprend une première partie positionnée sur un premier côté de la bride (187) et une deuxième partie positionnée sur un deuxième côté de la bride, le premier côté de la bride étant opposé au deuxième côté de la bride, la première partie du joint étant configurée pour former une première étanchéité entre le cadre (180) et la base du boîtier (120) et la deuxième partie du joint configurée pour former une deuxième étanchéité entre le cadre et le couvercle du boîtier (140).
